# EUROPEAN PATENT SPECIFICATION

(11) **EP 3 691 263 B1**
(45) Date of publication and mention of the grant of the patent: **22.04.2026**
(21) Application number: 18862030.6
(22) Date of filing: 31.08.2018
(51) Int. Cl.: H04N 19/11, H04N 19/159, H04N 19/176, H04N 19/147, H04N 19/593

(54) **INTRA-FRAME PREDICTION METHOD AND APPARATUS, VIDEO ENCODING DEVICE AND STORAGE MEDIUM**
VERFAHREN UND VORRICHTUNG FÜR INTRAFRAME-PRÄDIKTION, VIDEOCODIERUNGSVORRICHTUNG UND SPEICHERMEDIUM
PROCÉDÉ ET APPAREIL DE PRÉDICTION INTRA-TRAME, DISPOSITIF DE CODAGE VIDÉO, ET SUPPORT DE STOCKAGE

(30) Priority: 28.09.2017 CN 201710901193
(43) Date of publication of application: 05.08.2020
(73) Proprietor: Tencent Technology (Shenzhen) Company Limited, Shenzhen, Guangdong, 518057 (CN)
(72) Inventor: LIN, Sixin, Shenzhen Guangdong 518057 (CN); CHENG, Ximing, Shenzhen Guangdong 518057 (CN)
(74) Representative: Novagraaf International SA
(86) International application number: PCT/CN2018/103636
(87) International publication number: WO 2019/062475

(56) References cited:
- CN-A- 102 665 078
- CN-A- 102 843 559
- CN-A- 102 917 226
- CN-A- 104 054 343
- US-A1- 2009 225 834
- US-A1- 2016 112 720
- YAN-QIANG LEI ET AL: "Overlapping Interval Differences-Based Fast Intra Mode Decision for H.264/AVC", INTELLIGENT INFORMATION HIDING AND MULTIMEDIA SIGNAL PROCESSING (IIH-MSP), 2010 SIXTH INTERNATIONAL CONFERENCE ON, IEEE, PISCATAWAY, NJ, USA, 15 October 2010 (2010-10-15), pages 659 - 663, XP031801925, ISBN: 978-1-4244-8378-5

## Description

This application claims priority to Chinese Patent Application No. 201710901193.1, entitled "INTRA-FRAME PREDICTION METHOD AND APPARATUS, AND STORAGE MEDIUM" filed with China National Intellectual Property Administration on September 28, 2017.

### FIELD

The present disclosure relates to the field of video processing technologies, and in particular, to an intra-frame prediction technology.

### BACKGROUND

Intra-frame prediction is a link of video coding. Through intra-frame prediction, spatial redundancy information during video coding may be eliminated, and a video coding effect may be improved. Intra-frame prediction is especially applied in video coding of a mixed coding framework such as H.264/AVC, H.265/HEVC, and AVS.

Intra-frame prediction is a process of performing predictive coding on a target to-be-coded block by using a target intra-frame prediction direction of the target to-be-coded block. An important content of performing intra-frame prediction on the target to-be-coded block is: selecting an optimal intra-frame prediction direction from multiple intra-frame prediction directions of the target to-be-coded block as the target intra-frame prediction direction, and performing predictive coding on the target to-be-coded block by using the target intra-frame prediction direction. That is, the target intra-frame prediction direction is the optimal intra-frame prediction direction among the multiple intra-frame prediction directions for the target to-be-coded block. In addition to performing predictive coding on the target to-be-coded block by using the selected target intra-frame prediction direction, the selected target intra-frame prediction direction may also be written in a bitstream, to be transferred to a decoder to decode the target to-be-coded block.

In a current intra-frame prediction implementation process, the target intra-frame prediction direction is selected in the following manner: roughly selecting an intra-frame prediction direction from all intra-frame prediction directions and using the roughly selected intra-frame prediction direction and a target intra-frame prediction direction of a coded block adjacent to the determined target to-be-coded block as candidate intra-frame prediction directions, and finely selecting a target intra-frame prediction direction of the target to-be-coded block from the candidate intra-frame prediction directions. A problem existing in this manner is: selection of the target intra-frame prediction direction is complex, causing a high complexity of video coding, such that a real-time requirement of video coding cannot be met.

US 2009/225834 A1 discloses to select intra prediction mode candidates according to edge directions of pixels neighboring the current block

YAN-QIANG LEI ET AL: "Overlapping Interval Differences-Based Fast Intra Mode Decision for H.264/AVC" discloses that the prediction error of potential intra prediction modes is estimated using pixels of the current block and neighboring blocks.

### SUMMARY

In view of the above, an intra-frame prediction method and apparatus, and a storage medium are provided according to the embodiments of the present disclosure, to lower selection complexity of a target intra-frame prediction direction, so that complexity of video coding is lowered, and a real-time requirement of video coding is met.

To achieve the foregoing objective, the following technical solutions are provided according to the embodiments of the present disclosure.

An intra-frame prediction method is provided. The intra-frame prediction method is applied to a video coding device and includes:
determining pixel main directions of reference coded blocks spatially neighboring to a target to-be-coded block, the target to-be-coded block being a to-be-coded block on which predictive coding is to be performed;
searching, for each of the pixel main directions, for an intra-frame prediction direction, with a distance between the intra-frame prediction direction and the pixel main direction being within a set value, to obtain the intra-frame prediction direction correspondingly found for the pixel main direction;
forming candidate intra-frame prediction directions based on at least intra-frame prediction directions correspondingly found for the pixel main directions and the pixel main directions; and
performing predictive coding on the target to-be-coded block based on the candidate intra-frame prediction directions, and determining a target intra-frame prediction direction among the candidate intra-frame prediction directions based on predictive coding results respectively corresponding to the candidate intra-frame prediction directions.

An intra-frame prediction apparatus is further provided according to an embodiment of the present disclosure. The intra-frame prediction apparatus is applied to a video coding device and includes: a pixel main direction determining module, a prediction direction searching module, a candidate prediction direction determining module, and a target intra-frame prediction direction determining module.

The pixel main direction determining module is configured to determine pixel main directions of reference coded blocks spatially neighboring to a target to-be-coded block.

The prediction direction searching module is configured to search, for each of the pixel main directions, for an intra-frame prediction direction, with a distance between the intra-frame prediction direction and the pixel main direction being within a set value, to obtain the intra-frame prediction direction correspondingly found for the pixel main direction.

The candidate prediction direction determining module is configured to form candidate intra-frame prediction directions based on at least intra-frame prediction directions correspondingly found for the pixel main directions and the pixel main directions.

The target intra-frame prediction direction determining module is configured to perform predictive coding on the target to-be-coded block based on the candidate intra-frame prediction directions, and determine a target intra-frame prediction direction among the candidate intra-frame prediction directions based on predictive coding results respectively corresponding to the candidate intra-frame prediction directions.

A video coding device is further provided according to an embodiment of the present disclosure. The video coding device includes a memory and a processor.

The memory is configured to store information.

The processor is connected to the memory and configured to execute a computer program stored in the memory to perform:
determining pixel main directions of reference coded blocks spatially neighboring to a target to-be-coded block, the target to-be-coded block being a to-be-coded block on which predictive coding is to be performed;
for each of the pixel main directions, searching for an intra-frame prediction direction, with a distance between the intra-frame prediction direction and the pixel main direction being within a set value, to obtain the intra-frame prediction direction correspondingly found for the pixel main direction;
forming candidate intra-frame prediction directions based on at least intra-frame prediction directions correspondingly found for the pixel main directions and the pixel main directions; and
performing predictive coding on the target to-be-coded block based on the candidate intra-frame prediction directions, and determining a target intra-frame prediction direction among the candidate intra-frame prediction directions based on predictive coding results respectively corresponding to the candidate intra-frame prediction directions.

A storage medium is further provided according to an embodiment of the present disclosure. The storage medium stores a program that is executed by a central processing unit or a graphic processing unit for performing the intra-frame prediction method.

A computer program product is further provided according to an embodiment of the present disclosure. The computer program product includes an instruction. When being run on a computer, the instruction causing the computer to perform the intra-frame prediction method.

Based on the foregoing technical solutions, in the embodiments of the present disclosure, based on pixel main directions of reference coded blocks spatially neighboring to a target to-be-coded block, for each of the pixel main directions, an intra-frame prediction direction with a distance between the intra-frame prediction direction and the pixel main direction being within a set value is searched for, and candidate intra-frame prediction directions are formed based on at least the intra-frame prediction directions correspondingly found for the pixel main directions and the pixel main directions, to perform predictive coding on the target to-be-coded block based on the candidate intra-frame prediction directions, and a target intra-frame prediction direction is determined among the candidate intra-frame prediction directions based on predictive coding results respectively corresponding to the candidate intra-frame prediction directions. In the embodiments of the present disclosure, the candidate intra-frame prediction directions may be formed based on at least the intra-frame prediction directions correspondingly found for the pixel main directions and the pixel main directions, the number of the candidate intra-frame prediction directions is reduced, and the target intra-frame prediction direction is controlled to be selected directly based on the determined candidate intra-frame prediction directions, thereby eliminating the rough selection based on all the intra-frame prediction directions, such that processing complexity of selection of the target intra-frame prediction direction is reduced, and complexity of the entire video coding is reduced, and real-time video coding can be ensured.

### BRIEF DESCRIPTION OF THE DRAWINGS

To describe the technical solutions in the embodiments of the present disclosure or in the related technology more clearly, the following briefly describes the accompanying drawings required for describing the embodiments or the existing technology. Apparently, the accompanying drawings in the following description show merely some embodiments of the present disclosure, and a person of ordinary skill in the art may still derive other drawings from these provided accompanying drawings without creative efforts.
FIG. 1 is an example diagram of all intra-frame prediction directions;
FIG. 2 is a flowchart of an intra-frame prediction method according to an embodiment of the present disclosure;
FIG. 3 is an example diagram of a reference coded block;
FIG. 4 is a flowchart of an intra-frame prediction method according to another embodiment of the present disclosure;
FIG. 5 is a flowchart of a method for determining a target intra-frame prediction direction among candidate intra-frame prediction directions;
FIG. 6 is a flowchart of an intra-frame prediction method according to another embodiment of the present disclosure;
FIG. 7 is an example diagram of average values of re-established pixels in two upper rows and two left rows of a target to-be-coded block;
FIG. 8 is a flowchart of an intra-frame prediction method according to another embodiment of the present disclosure;
FIG. 9 is a schematic flowchart of an application example according to an embodiment of the present disclosure;
FIG. 10 is a schematic flowchart of an application example according to another embodiment of the present disclosure;
FIG. 11 is a block diagram showing a structure of an intra-frame prediction apparatus according to an embodiment of the present disclosure;
FIG. 12 is a block diagram showing a structure of an intra-frame prediction apparatus according to another embodiment of the present disclosure.
FIG. 13 is a block diagram showing a hardware structure of a video coding device.

### DESCRIPTION OF EMBODIMENTS

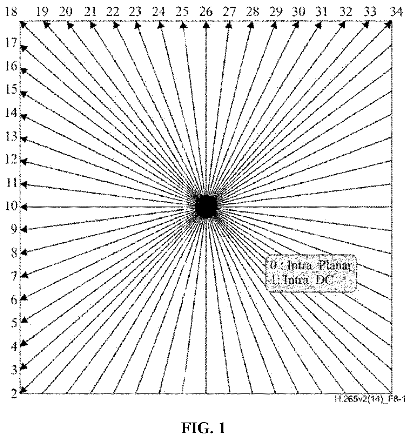

Using video coding in a High Efficiency Video Coding (HEVC) manner as an example, current HEVC has 35 intra-frame prediction directions in total. As shown in FIG. 1, numerals in FIG. 1 represent intra-frame prediction directions. In the conventional technology, when intra-frame prediction is performed on a target to-be-coded block, predictive coding is performed on the target to-be-coded block by using the 35 intra-frame prediction directions, N (N is an integer less than 35 and may be pre-defined) intra-frame prediction directions with smallest video residuals may be roughly selected from the 35 intra-frame prediction directions, and the N intra-frame prediction directions are used as candidate intra-frame prediction directions. In addition, a target intra-frame prediction direction selected for a coded block adjacent to the target to-be-coded block is also added into the candidate intra-frame prediction directions, then predictive coding is performed on the target to-be-coded block by using the candidate intra-frame prediction directions, and an intra-frame prediction direction with a smallest rate distortion cost is selected from the candidate intra-frame prediction directions as a target intra-frame prediction direction of the target to-be-coded block.

It may be learned that in the example of the existing intra-frame prediction process using HEVC, first, all the 35 intra-frame prediction directions need to be roughly selected by calculating video residuals, then the roughly selected intra-frame prediction directions and the target intra-frame prediction direction selected for the adjacent coded block are used as the candidate intra-frame prediction directions, and the target intra-frame prediction direction of the target to-be-coded block is finely selected from the candidate intra-frame prediction directions by calculating rate distortion costs. This manner requires sequentially performing intra-frame prediction of two stages (that is, a first stage of performing intra-frame prediction on the target to-be-coded block by using all the intra-frame prediction directions, and a second stage of performing intra-frame prediction on the target to-be-coded block by using the candidate intra-frame prediction directions) on the target to-be-coded block. It may be learned that complexity of the current process of selecting the target intra-frame prediction direction of the target to-be-coded block is high, resulting in high complexity of the entire video coding process and affecting real-time performance of video coding.

Therefore, the intra-frame prediction direction is optimized, the number of the candidate intra-frame prediction directions is reduced, and selection of the target intra-frame prediction direction of the target to-be-coded block is controlled to be intra-frame prediction of one stage, to lower complexity in selection of the target intra-frame prediction direction, lower complexity of the entire video coding process, thereby ensuring a real-time requirement of video coding.

Based on the above, the following clearly and completely describes the technical solutions in the embodiments of the present disclosure with reference to the accompanying drawings in the embodiments of the present disclosure. Apparently, the described embodiments are some embodiments of the present disclosure rather than all of the embodiments.

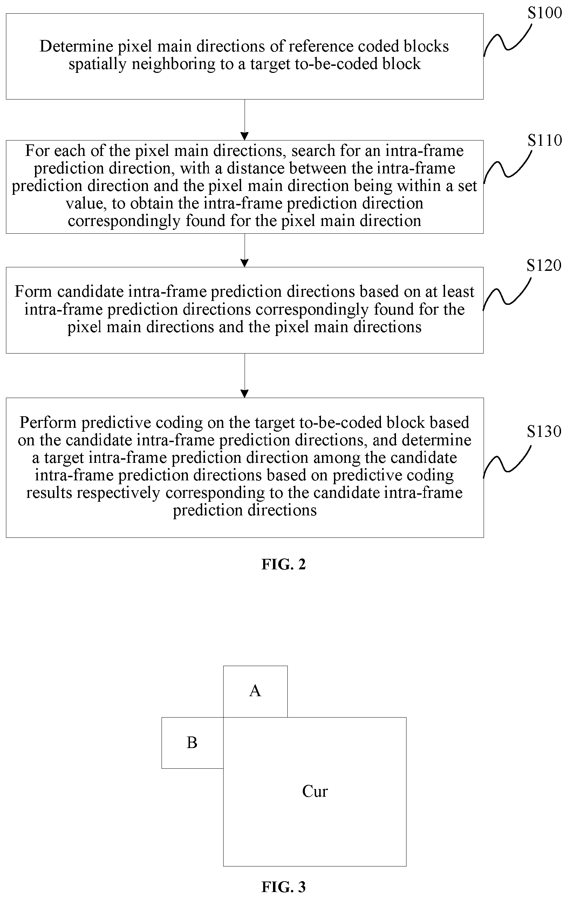

FIG. 2 is a flowchart of an intra-frame prediction method according to an embodiment of the present disclosure. The intra-frame prediction method may be applied to a video coding device. The video coding device may be a central processing unit (CPU) or a graphic processing unit (GPU) having a video coding capacity. Optionally, the video coding device may be implemented as a terminal such as a mobile phone or a notebook computer, or may be implemented as a server.

Referring to FIG. 2, the intra-frame prediction method provided in this embodiment of the present disclosure may include the following steps S100 to S130.

In step S100, pixel main directions of reference coded blocks spatially neighboring to a target to-be-coded block.

It should be understood that, the target to-be-coded block is a to-be-coded block on which predictive coding currently need to be performed, and the coded block may be regarded as a code block on which predictive coding is performed by using the target intra-frame prediction direction determined by using the intra-frame prediction method provided according to the embodiment of the present disclosure.

Optionally, the coded block is also referred to a re-established to-be-coded block. A to-be-coded block becomes a coded block after predictive coding is performed on the to-be-coded block through the determined target intra-frame prediction direction, and pixels in the coded block are processed and re-established. For example, for any to-be-coded block, predictive coding is performed on the to-be-coded block by using the target intra-frame prediction direction for the to-be-coded block determined by using the intra-frame prediction method provided according to the embodiment of the present disclosure to obtain an intra-frame prediction residual of the to-be-coded block, transform and quantization are performed on the intra-frame prediction residual, and then inverse quantization and inverse transform are performed on the intra-frame prediction residual, to obtain a pixel re-establishment value of the to-be-coded block, so that pixels of the to-be-coded block are established after predictive coding is performed on the to-be-coded block based on the target intra-frame prediction direction.

Optionally, the selected reference coded block spatially neighboring to the target to-be-coded block may be: a coded block spatially neighboring to the target to-be-coded block and immediately adjacent to a corner of the target to-be-coded block. Based on information provided after the reference coded block is coded, in the embodiment of the present disclosure, a candidate intra-frame prediction direction of the target to-be-coded block can be determined.

Optionally, in an embodiment of the present disclosure, a first coded block that is on a left side of and is immediately adjacent to an upper corner of the target to-be-coded block and a second coded block that is on an upper side of and is immediately adjacent to a left corner of the target to-be-coded block may be selected as the reference coded blocks. As shown in FIG. 3, a first coded block A immediately adjacent to a left side of an upper corner of a target to-be-coded block cur and a second coded block B immediately adjacent to an upper side of a left corner of the target to-be-coded block cur may be selected as the selected reference coded blocks spatially neighboring to the target to-be-coded block.

FIG. 3 shows only an optional example. During specific application, the number of the reference coded blocks may be one or at least two. Certainly, it is not limited to the selected reference coded blocks shown in FIG. 3. The reference coded blocks shown in FIG. 3 and coded blocks immediately adjacent to other corners of the target to-be-coded block may be used as the selected reference coded blocks. A specific manner may be determined according to an actual requirement.

After the reference coded blocks spatially neighboring to the target to-be-coded block are selected, the pixel main directions of the reference coded blocks may be determined.

Optionally, for a reference coded block, in an embodiment of the present disclosure, directions of pixels of the reference coded block may be determined, and a direction with a greatest number of pixels in the reference coded block is used as a pixel main direction of the reference coded block. The reference coded blocks are processed in this manner, to obtain the pixel main directions of the reference coded blocks.

Optionally, for a reference coded block, in an embodiment of the present disclosure, a Sobel operator (a Sobel algorithm is referred to as a Sobel operator and is one of the most important operators in pixel image edge detection) may be used to determine directions of pixels of the reference coded block.

In step S110, for each of the pixel main directions, search for an intra-frame prediction direction, with a distance between the intra-frame prediction direction and the pixel main direction being within a set value, to obtain the intra-frame prediction direction correspondingly found for the pixel main direction.

Optionally, after the pixel main directions of the reference coded blocks are determined, for each of the pixel main directions of the reference coded blocks (that is, for each of the pixel main directions), in an embodiment of the present disclosure, by using each of the pixel main directions as a center, the intra-frame prediction direction with a distance between the intra-frame prediction direction and the pixel main direction being within the set value is searched for, to obtain the intra-frame prediction direction correspondingly found for the pixel main direction. That is, the intra-frame prediction direction correspondingly found for the pixel main direction is: an intra-frame prediction direction that is found with the pixel main direction being used as a center and the distance between the intra-frame prediction direction and the pixel main direction being within the set value.

It should be understood that for a reference coded block, the pixel main direction of the reference coded block may correspond to an intra-frame prediction direction, to obtain the intra-frame prediction direction correspondingly found for the pixel main direction, where a distance between the intra-frame prediction direction correspondingly found for the pixel main direction and the intra-frame prediction direction corresponding to the pixel main direction is within a set value (for example, searching is performed based on the serial numbers of the intra-frame prediction directions shown in FIG. 1).

Optionally, searching for the intra-frame prediction direction with the pixel main direction being used as a center, and the distance between the intra-frame prediction direction and the pixel main direction being within the set value may be: for a pixel main direction, searching for an intra-frame prediction direction which is less than the pixel main direction by a value less than a set value, and an intra-frame prediction direction which is greater than the pixel main direction by a value less than the set value, to obtain the intra-frame prediction direction correspondingly found for the pixel main direction.

Using an example in which the set value is 2, for a pixel main direction modA, intra-frame prediction directions that are found with modA being used as a center and distances between the intra-frame prediction directions and modA being within the set value are: modA-2, modA-1, modA+1, and modA+2. That is, the intra-frame prediction directions correspondingly found for the pixel main direction modA are intra-frame prediction directions with distances between the intra-frame prediction directions and modA being 2.

In step S120, candidate intra-frame prediction directions are formed based on at least intra-frame prediction directions correspondingly found for the pixel main directions in combination with the pixel main directions.

After intra-frame prediction directions correspondingly found for the pixel main directions are determined, in an embodiment of the present disclosure, at least the intra-frame prediction directions correspondingly found for the pixel main directions and the pixel main directions may be combined to form the candidate intra-frame prediction directions.

Optionally, in an implementation, the candidate intra-frame prediction directions may be formed by combining the intra-frame prediction directions correspondingly found for the pixel main directions and the pixel main directions. That is, the number of the candidate intra-frame prediction directions may be: the number of the intra-frame prediction directions correspondingly found for the pixel main directions plus the number of the pixel main directions.

Optionally, in another implementation, the candidate intra-frame prediction directions may be formed by combining the intra-frame prediction directions correspondingly found for the pixel main directions, the pixel main directions, a first set intra-frame prediction direction, and a second set intra-frame prediction direction. That is, the number of the candidate intra-frame prediction directions may be: the number of the intra-frame prediction directions correspondingly found for the pixel main directions plus the number of the pixel main directions and plus 2. Optionally, the first set intra-frame prediction direction is, for example, a direct current (DC) component prediction intra-frame prediction direction, and the second set intra-frame prediction direction is, for example, a planar (planar prediction) intra-frame prediction direction.

Optionally, the number of the candidate intra-frame prediction directions is required to be less than the number of all the intra-frame prediction directions. That is, in an embodiment of the present disclosure, regardless of the manner for forming the candidate intra-frame prediction directions, the number of the candidate intra-frame prediction directions is required to be less than the number of all the intra-frame prediction directions. Using HEVC video coding as an example, the number of the candidate intra-frame prediction directions is required to be less than 35. In an embodiment of the present disclosure, the number of the candidate intra-frame prediction directions may be controlled by setting the set value or controlled by setting the number of the reference coded blocks.

Optionally, in an embodiment of the present disclosure, a candidate list may be set, and the candidate intra-frame prediction directions formed based on at least the intra-frame prediction directions correspondingly found for the pixel main directions and the pixel main directions in step S130 are recorded in the candidate list.

In step S130, predictive coding is performed on the target to-be-coded block based on the candidate intra-frame prediction directions, and a target intra-frame prediction direction is determined among the candidate intra-frame prediction directions based on predictive coding results respectively corresponding to the candidate intra-frame prediction directions.

After the candidate intra-frame prediction directions are determined, in an embodiment of the present disclosure, predictive coding may be performed on the target to-be-coded block based on the candidate intra-frame prediction directions, to obtain predictive coding results respectively corresponding to the candidate intra-frame prediction directions, and the target intra-frame prediction direction is determined among the candidate intra-frame prediction directions based on the predictive coding results respectively corresponding to the candidate intra-frame prediction directions, to select the target intra-frame prediction direction of the target to-be-coded block in an intra-frame prediction process.

Optionally, in this embodiment of the present disclosure, rate distortion costs corresponding to the candidate intra-frame prediction directions may be determined based on the predictive coding results respectively corresponding to the candidate intra-frame prediction directions, and a candidate intra-frame prediction direction with a smallest rate distortion cost is selected as the target intra-frame prediction direction.

After the target intra-frame prediction direction of the target to-be-coded block is determined, final predictive coding may be performed on the target to-be-coded block by using the target intra-frame prediction direction, and the target intra-frame prediction direction of the target to-be-coded block may be written into a bitstream, to be transferred to a decoder to decode the coded target to-be-coded block.

The intra-frame prediction method according to the embodiments of the present disclosure includes: determining pixel main directions of reference coded blocks spatially neighboring to a target to-be-coded block; for each of the pixel main directions, searching for an intra-frame prediction direction, a distance between the intra-frame prediction direction and the pixel main direction being within a set value, to obtain the intra-frame prediction direction correspondingly found for the pixel main direction; forming candidate intra-frame prediction directions based on at least the pixel main directions in combination with intra-frame prediction directions correspondingly found for the pixel main directions; and performing predictive coding on the target to-be-coded block based on the candidate intra-frame prediction directions, and determining a target intra-frame prediction direction among the candidate intra-frame prediction directions based on predictive coding results respectively corresponding to the candidate intra-frame prediction directions.

It may be learned that in the embodiments of the present disclosure, based on pixel main directions of reference coded blocks spatially neighboring to a target to-be-coded block, for each of the pixel main directions, an intra-frame prediction direction with a distance between the intra-frame prediction direction and the pixel main direction being within a set value is searched for, and candidate intra-frame prediction directions are formed based on at least the intra-frame prediction directions correspondingly found for the pixel main directions and the pixel main directions, to perform predictive coding on the target to-be-coded block based on the candidate intra-frame prediction directions, and a target intra-frame prediction direction is determined among the candidate intra-frame prediction directions based on predictive coding results respectively corresponding to the candidate intra-frame prediction directions. In the embodiments of the present disclosure, the candidate intra-frame prediction directions may be formed based on at least the intra-frame prediction directions correspondingly found for the pixel main directions and the pixel main directions, the number of the candidate intra-frame prediction directions is reduced, and the target intra-frame prediction direction is controlled to be selected directly based on the determined candidate intra-frame prediction directions, thereby eliminating the rough selection based on all the intra-frame prediction directions, such that processing complexity of selection of the target intra-frame prediction direction is reduced, and complexity of the entire video coding is reduced, and real-time video coding can be ensured.

It is to be noted that, the inventor finds that the target intra-frame prediction direction of the target to-be-coded block has a correlation with intra-frame prediction directions near the pixel main directions of the reference coded blocks spatially neighboring to the target to-be-coded block. Therefore, the intra-frame prediction directions that the distances between the intra-frame prediction directions and the pixel main directions are within the set value and that meet the correlation are searched for, and the candidate intra-frame prediction directions are formed based on at least the found intra-frame prediction directions and the pixel main directions, so that the candidate intra-frame prediction directions include the target intra-frame prediction direction of the target to-be-coded block. Therefore, accuracy of the target intra-frame prediction direction determined by using the intra-frame prediction method according to the embodiments of the present disclosure can be ensured.

Optionally, in an optional example, in an embodiment of the present disclosure, the first coded block immediately adjacent to the left side of the upper corner of the target to-be-coded block and the second coded block immediately adjacent to the upper side of the left corner of the target to-be-coded block may be selected as the selected reference coded blocks.

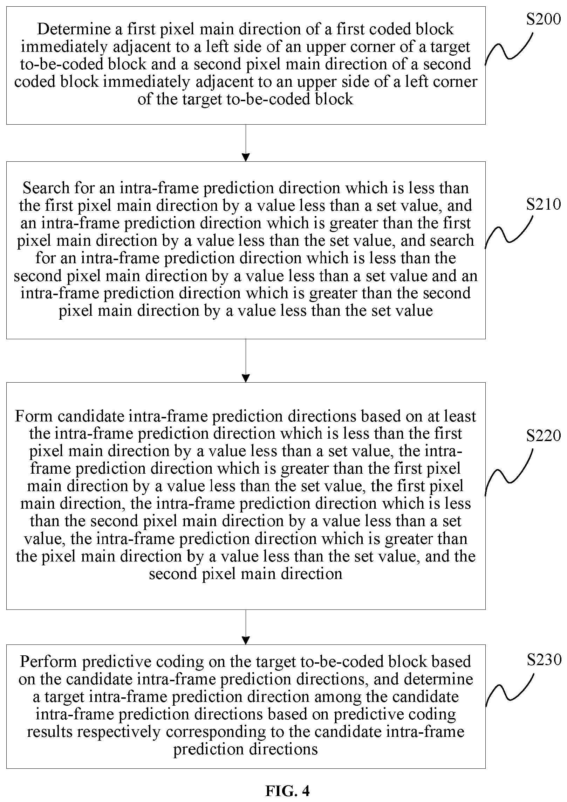

Optionally, FIG. 4 is a flowchart of an intra-frame prediction method according to another embodiment of the present disclosure. Referring to FIG. 4, the method may include the following steps S200 to S230.

In step S200, a first pixel main direction of a first coded block immediately adjacent to a left side of an upper corner of a target to-be-coded block and a second pixel main direction of a second coded block immediately adjacent to an upper side of a left corner of the target to-be-coded block are determined.

To facilitate description, in an embodiment of the present disclosure, a coded block immediately adjacent to the left side of the upper corner of the target to-be-coded block may be referred to as the first coded block. As shown in FIG. 3, a coded block A is the first coded block. A coded block immediately adjacent to the upper side of the left corner of the target to-be-coded block may be referred to as the second coded block. As shown in FIG. 3, a coded block B is the second coded block.

Optionally, in an embodiment of the present disclosure, a Sobel operator may be used to determine directions of pixels of the first coded block, and a direction with a greatest number of pixels in the first coded block is used as a pixel main direction (referred to as the first pixel main direction) of the first coded block. In addition, the Sobel operator may be used to determine directions of pixels of the second coded block, and a direction with a greatest number of pixels in the second coded block is used as a pixel main direction (referred to as the second pixel main direction) of the second coded block.

In Step S210, an intra-frame prediction direction which is less than the first pixel main direction by a value less than a set value, and an intra-frame prediction direction which is greater than the first pixel main direction by a value less than the set value are searched for, and an intra-frame prediction direction which is less than the second pixel main direction by a value less than a set value and an intra-frame prediction direction which is greater than the second pixel main direction by a value less than the set value are searched for.

Optionally, for the first pixel main direction, in an embodiment of the present disclosure, an intra-frame prediction direction within a range from the first pixel main direction minus a set value to the first pixel main direction plus the set value may be searched for, to obtain the intra-frame prediction directions correspondingly found for the first pixel main direction. For example, using an example in which the set value is 2, and the first pixel main direction is modA, intra-frame prediction directions of modA-2, modA-1, modA+1, and modA+2 may be found for modA.

For the second pixel main direction, in an embodiment of the present disclosure, an intra-frame prediction direction within a range from the second pixel main direction minus the set value and to the second pixel main direction plus the set value may be searched for, to obtain the intra-frame prediction directions correspondingly found for the second pixel main direction. For example, using an example in which the set value is 2, and the second pixel main direction is modB, intra-frame prediction directions of modB-2, modB-1, modB+1, and modB+2 may be found for modB.

Obviously, that the the set value is selected as 2 is only an optional example or may be selected as 3, 4, or the like. This is determined according to an actual requirement.

In step S220, candidate intra-frame prediction directions are formed based on at least the intra-frame prediction direction which is less than the first pixel main direction by a value less than a set value, the intra-frame prediction direction which is greater than the first pixel main direction by a value less than the set value, the first pixel main direction, the intra-frame prediction direction which is less than the second pixel main direction by a value less than a set value, the intra-frame prediction direction which is greater than the pixel main direction by a value less than the set value, and the second pixel main direction.

Optionally, using an example in which the set values are 2, the first pixel main direction is modA, and the second pixel main direction is modB, in an embodiment of the present disclosure, the candidate intra-frame prediction directions may be formed at least based on modA-2, modA-1, modA, modA+1, modA+2, modB-2, modB-1, modB, modB+1, and modB+2.

In an optional example, a range for the candidate intra-frame prediction directions may be {modA-2, modA-1, modA, modA+1, modA+2, modB-2, modB-1, modB, modB+1, modB+2}.

In another optional example, the candidate intra-frame prediction directions may further combine the first set intra-frame prediction direction (such as a DC intra-frame prediction direction) and the second set intra-frame prediction direction (such as a planar intra-frame prediction direction). Correspondingly, the range for the candidate intra-frame prediction directions may be: {DC, planar, modA-2, modA-1, modA, modA+1, modA+2, modB-2, modB-1, modB, modB+1, modB+2}.

Therefore, the number of the candidate intra-frame prediction directions is less than the number of all the intra-frame prediction directions. Compared with all the intra-frame prediction directions (such as 35 intra-frame prediction directions in an HEVC situation), with the intra-frame prediction method according to the embodiments of the present disclosure, the number of the determined candidate intra-frame prediction directions is greatly reduced.

In step S230, predictive coding is performed on the target to-be-coded block based on the candidate intra-frame prediction directions, and a target intra-frame prediction direction among the candidate intra-frame prediction directions is determined based on predictive coding results respectively corresponding to the candidate intra-frame prediction directions.

The manner for selecting the reference coded blocks in the method of FIG. 4 is only an example. The form of the reference coded blocks may be determined according to a specific situation.

Optionally, in an embodiment of the present disclosure, after predictive coding is performed on the target to-be-coded block based on the candidate intra-frame prediction directions, the target intra-frame prediction direction of the target to-be-coded block may be determined among the candidate intra-frame prediction directions in a rate distortion optimization (RDO) manner.

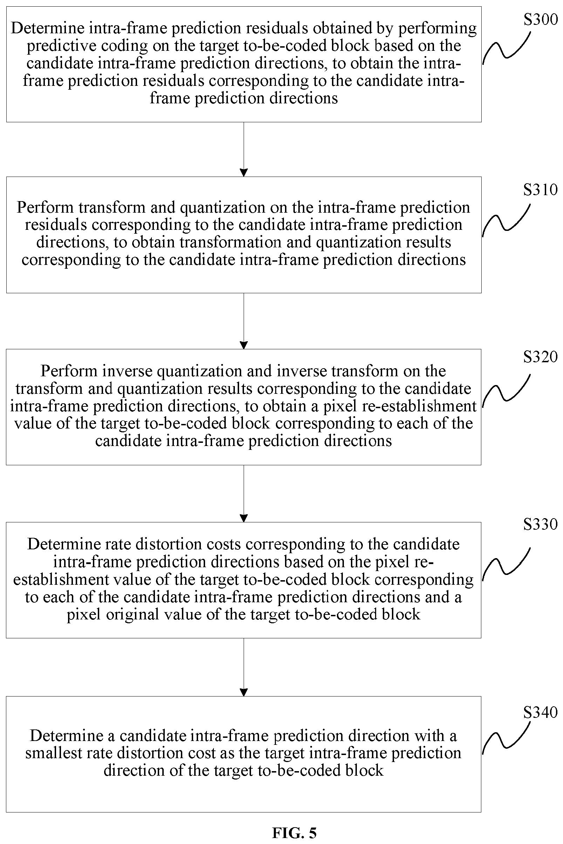

Optionally, FIG. 5 shows a process of a method for determining the target intra-frame prediction direction among the candidate intra-frame prediction directions. Referring to FIG. 5, the method may include the following steps S300 to S340.

In step S300, intra-frame prediction residuals obtained by performing predictive coding on the target to-be-coded block based on the candidate intra-frame prediction directions are determined, to obtain the intra-frame prediction residuals corresponding to the candidate intra-frame prediction directions.

In an embodiment of the present disclosure, after predictive coding is performed on the target to-be-coded block based on the candidate intra-frame prediction directions, intra-frame prediction residuals under the candidate intra-frame prediction directions (that is, intra-frame prediction residuals corresponding to the candidate intra-frame prediction directions) may be obtained.

In step S310, transform and quantization are performed on the intra-frame prediction residuals corresponding to the candidate intra-frame prediction directions, to obtain transform and quantization results corresponding to the candidate intra-frame prediction directions.

When the intra-frame prediction residuals corresponding to the candidate intra-frame prediction directions are determined, in an embodiment of the present disclosure, transform and quantization may be performed on the intra-frame prediction residuals corresponding to the candidate intra-frame prediction directions, to obtain transform and quantization results corresponding to the candidate intra-frame prediction directions.

In step S320, inverse quantization and inverse transform are performed on the transform and quantization results corresponding to the candidate intra-frame prediction directions, to obtain a pixel re-establishment value of the target to-be-coded block corresponding to each of the candidate intra-frame prediction directions.

After the transform and quantization results corresponding to the candidate intra-frame prediction directions are determined, in an embodiment of the present disclosure, inverse quantization and inverse transform may be performed on the transform and quantization results corresponding to the candidate intra-frame prediction directions, to obtain a pixel re-establishment value of the target to-be-coded block in each of the candidate intra-frame prediction directions.

In step S330, rate distortion costs corresponding to the candidate intra-frame prediction directions are determined based on the pixel re-establishment value of the target to-be-coded block corresponding to each of the candidate intra-frame prediction directions and a pixel original value of the target to-be-coded block.

Optionally, step S300 to step S330 may be regarded as an optional implementation of determining the rate distortion costs of the candidate intra-frame prediction directions based on the predictive coding results corresponding to the candidate intra-frame prediction directions.

In step S340, a candidate intra-frame prediction direction with a smallest rate distortion cost is determined as the target intra-frame prediction direction of the target to-be-coded block.

After pixel re-establishment values of the target to-be-coded block corresponding to the candidate intra-frame prediction directions are determined, for any one of the candidate intra-frame prediction directions, in an embodiment of the present disclosure, a RD cost (Rate Distortion cost) based on SSE (a Sum of Square Error) may be determined based on the pixel re-establishment value of a corresponding target to-be-coded block and a pixel original value of the target to-be-coded block, to obtain an RD cost corresponding to the candidate intra-frame prediction direction. In this way, RD costs corresponding to the candidate intra-frame prediction directions are determined, and a candidate intra-frame prediction direction with a smallest RD cost is determined as the target intra-frame prediction direction of the target to-be-coded block.

Obviously, the foregoing manner of determining the target intra-frame prediction direction of the target to-be-coded block in an RDO manner is only optional. In an embodiment of the present disclosure, after predictive coding is performed on the target to-be-coded block based on the candidate intra-frame prediction directions, costs in other forms (for example, directly using the intra-frame prediction residuals as costs) corresponding to the candidate intra-frame prediction directions may be determined, and a candidate intra-frame prediction direction with a smallest cost is selected as the target intra-frame prediction direction of the target to-be-coded block.

Optionally, the method shown in FIG. 2 and FIG. 4 may be performed in no limitation condition. When intra-frame prediction is to be performed on a to-be-coded block, intra-frame prediction may be directly performed on the to-be-coded block by using the method shown in FIG. 2 and FIG. 4. In this process, whether the first set intra-frame prediction direction and the second set intra-frame prediction direction are added into the candidate intra-frame prediction directions may be randomly selected.

In another implementation, the method shown in FIG. 2 and FIG. 4 may be performed when a limitation condition is met. That is, a limitation condition is set, and the intra-frame prediction method according to the embodiments of the present disclosure is implemented through the method shown in FIG. 2 and FIG. 4 only in a case that the limitation condition is met. In a case that the limitation condition is not met, another intra-frame prediction process, which is different from the above method, may be used for implementing the intra-frame prediction method.

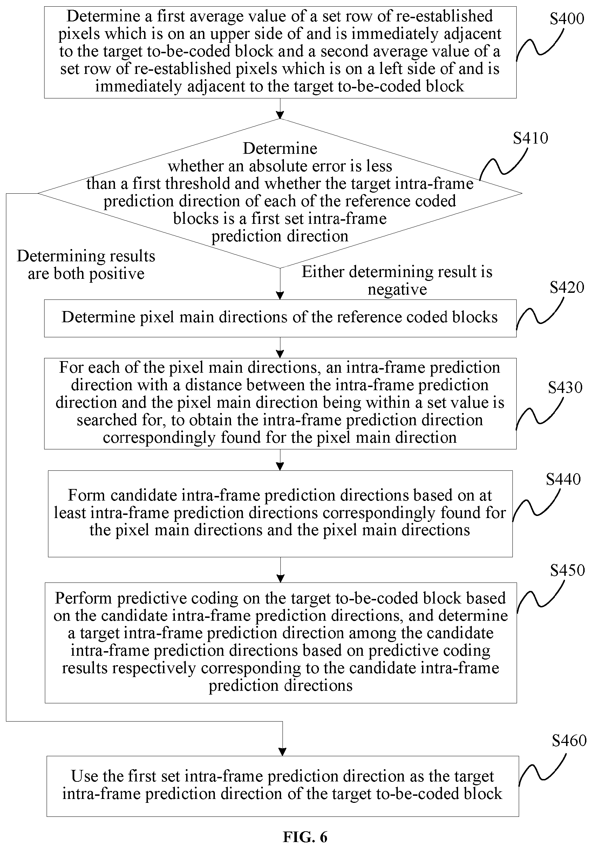

Optionally, FIG. 6 is another flowchart of an intra-frame prediction method according to an embodiment of the present disclosure. Referring to FIG. 6, the method may include the following steps S400 to S460.

In step S400, a first average value of a set row of re-established pixels which is on an upper side of and is immediately adjacent to the target to-be-coded block and a second average value of a set row of re-established pixels which is on a left side of and is immediately adjacent to the target to-be-coded block are determined.

Optionally, the set row of re-established pixels which is on an upper side of and is immediately adjacent to the target to-be-coded block may be: a set row of re-established pixels of an upper coded block of the target to-be-coded block, the set row of re-established pixels being immediately adjacent to the target to-be-coded block. That is, an upper coded block of the target to-be-coded block is determined, and the average value of a set row of re-established pixels of the upper coded block which is immediately adjacent to the target to-be-coded block may be determined, to obtain the first average value.

The set row of re-established pixels which is on a left side of and is immediately adjacent to the target to-be-coded block may be: a set row of re-established pixels of a left coded block of the target to-be-coded block, the set row of re-established pixels being immediately adjacent to the target to-be-coded block. That is, a left coded block of the target to-be-coded block is determined, and the average value of a set row of re-established pixels of the left coded block which is immediately adjacent to the target to-be-coded block may be determined, to obtain the second average value.

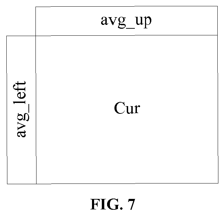

In an optional example, as shown in FIG. 7, in an embodiment of the present disclosure, an average value of re-established pixels in two undermost rows of the upper coded block of the target to-be-coded block may be determined, to obtain the first average value (which may be referred as avg_up). In an embodiment of the present disclosure, an average value of re-established pixels in two right-most rows of the left coded block of the target to-be-coded block may be determined, to obtain the second average value (which may be referred to as avg_left).

That is, the re-established pixels in two undermost rows of the upper coded block of the target to-be-coded block may be regarded as the set row of re-established pixels which is on a left side of and is immediately adjacent to the target to-be-coded block, and the re-established pixels in two right-most lines of the left coded block of the target to-be-coded block may be regarded as the set row of re-established pixels which is on a left side of and is immediately adjacent to the target to-be-coded block.

In an example, the number of rows and columns of a to-be-coded block may be 16*16. Each line has 16 pixels. Obviously, the number of rows and columns of the to-be-coded block and the number of pixels in each row may be determined according to an actual situation. Only exemplary descriptions are provided herein.

In step S410, it is determined whether an absolute error between the first average value and the second average value is less than a first threshold and whether the target intra-frame prediction direction of each of the reference coded blocks spatially neighboring to the target to-be-coded block is a first set intra-frame prediction direction. If either determining result is negative, step S420 is performed, and if determining results are both positive, step S460 is performed.

In step S420, pixel main directions of the reference coded blocks are determined.

If either determining result is negative in step S410, it indicates that the absolute error between the first average value and the second average value is not less than the first threshold, and/or none of the target intra-frame prediction directions of the reference coded blocks is the first set intra-frame prediction direction. In this case, the process shown in FIG. 2 and FIG. 4 may be performed. That is, the pixel main directions of the reference coded blocks may be first determined, and then the method is performed according to the process shown in FIG. 2 and FIG. 4.

Optionally, the first threshold may be set according to an actual situation. Because the absolute error between the first average value and the second average value is not less than the first threshold, and none of the target intra-frame prediction directions of the reference coded blocks is the first set intra-frame prediction direction (neither of the target intra-frame prediction directions of the first coded block and second coded blocks shown in FIG. 4 is the DC intra-frame prediction direction, and the DC intra-frame prediction direction may be used as the first set intra-frame prediction direction), a difference between re-established pixels of coded blocks spatially neighboring to the target to-be-coded block may be considered to be large. For the target to-be-coded block, a selection range of the intra-frame prediction directions needs to be expanded.

However, in an embodiment of the present disclosure, to reduce processing complexity of selection of the target intra-frame prediction direction of the target to-be-coded block, the pixel main directions of the reference coded blocks are creatively first determined, and then an intra-frame prediction direction that may be added into the candidate intra-frame prediction directions is searched for by using the pixel main directions, so that the number of the candidate intra-frame prediction directions can be controlled.

In step S430, for each of the pixel main directions, an intra-frame prediction direction with a distance between the intra-frame prediction direction and the pixel main direction being within a set value is searched for, to obtain the intra-frame prediction direction correspondingly found for the pixel main direction.

In step S440, candidate intra-frame prediction directions are formed based on at least intra-frame prediction directions correspondingly found for the pixel main directions and the pixel main directions.

In step S450, predictive coding is performed on the target to-be-coded block based on the candidate intra-frame prediction directions, and a target intra-frame prediction direction among the candidate intra-frame prediction directions is determined based on predictive coding results respectively corresponding to the candidate intra-frame prediction directions.

In step S460, the first set intra-frame prediction direction is used as the target intra-frame prediction direction of the target to-be-coded block.

If the determining results are both positive in step S410, it indicates that the absolute error between the first average value and the second average value is less than the first threshold, and the target intra-frame prediction directions of the reference coded blocks are all the first set intra-frame prediction direction, the difference between the re-established pixels of the coded blocks spatially neighboring to the target to-be-coded block may be considered to be small, and there is a large probability for the target intra-frame prediction direction of the target to-be-coded block to be consistent with the target intra-frame prediction direction of the reference coded block. Therefore, the target intra-frame prediction direction of the target to-be-coded block may be considered as the first set intra-frame prediction direction used by the spatially neighboring reference coded blocks (for example, the target intra-frame prediction direction of the target to-be-coded block is the DC intra-frame prediction direction). Therefore, the first set intra-frame prediction direction may be used as the target intra-frame prediction direction of the target to-be-coded block, thereby eliminating a process of determining the target intra-frame prediction direction by performing predictive coding on the target to-be-coded blocks based on each of the candidate intra-frame prediction directions, such that processing complexity can be greatly reduced.

Therefore, in the embodiments of the present disclosure, in a case that the absolute error between the first average value and the second average value is not less than the first threshold, and/or none of the target intra-frame prediction directions of the reference coded blocks is the first set intra-frame prediction direction, the method shown in FIG. 1 and FIG. 4 is performed.

In a case that the absolute error between the first average value and the second average value is less than the first threshold, and the target intra-frame prediction directions of the reference coded blocks are the first set intra-frame prediction direction, a parallel process different from the method shown in FIG. 1 and FIG. 4 is provided, that is, the first set intra-frame prediction direction is directly used as the target intra-frame prediction direction of the target to-be-coded block.

In an optional example of FIG. 6, using an example in which the at least one reference coded block is a first coded block A and a second coded block B, the first pixel main direction is modA, the second pixel main direction is modB, and the set value is 2, in an embodiment of the present disclosure, intra-frame prediction may be performed on the target to-be-coded block cur through the following process.

A first average value (defined as avg_up) of re-established pixels in two upper rows immediately adjacent to the target to-be-coded block cur and a second average value (defined as avg_left) of re-established pixels in two left rows immediately adjacent the target to-be-coded block cur are determined.

If the absolute error between avg_up and avg_left is less than the first threshold (defined as Thd1), and each of the target intra-frame prediction directions of the first coded block A and the second coded block B are both the DC intra-frame prediction directions, it may be determined that the target intra-frame prediction direction of the target to-be-coded block cur is the DC intra-frame prediction direction. Obviously, it may also be set that if the absolute error between avg_up and avg_left is less than Thd1, and the target intra-frame prediction directions of the first coded block A and the second coded block B are both the planar intra-frame prediction directions, it may be determined that the target intra-frame prediction direction of the target to-be-coded block cur is the planar intra-frame prediction direction.

If the absolute error between avg_up and avg_left is not less than Thd1, and/or neither of the target intra-frame prediction directions of the first coded block A and the second coded block B is the DC intra-frame prediction direction, a first pixel main direction modA of the first reference coded block A and a second pixel main direction modB of the second reference coded block B may be determined. Intra-frame prediction directions with distances between the intra-frame prediction directions and modA being less than 2 are searched for, which include: modA-2, modA-1, modA+1, and modA+2. Intra-frame prediction directions with distances between the intra-frame prediction directions and modB being less than 2 are searched for, which include: modB-2, modB-1, modB+1, and modB+2. The candidate intra-frame prediction directions are formed based on at least modA-2, modA-1, modA, modA+1, modA+2, modB-2, modB-1, modB, modB+1, and modB+2. Further, a target intra-frame prediction direction of the target to-be-coded block is determined among the candidate intra-frame prediction directions in a manner such as RDO.

In some cases, based on that it is determined that the absolute error between the first average value and the second average value is not less than the first threshold, and/or none of the target intra-frame prediction directions of the reference coded blocks is the first set intra-frame prediction direction, in an embodiment of the present disclosure, whether the first set intra-frame prediction direction and the second set intra-frame prediction direction (such as the DC and planar intra-frame prediction directions) are added into the candidate intra-frame prediction directions of the target to-be-coded block may also be selected.

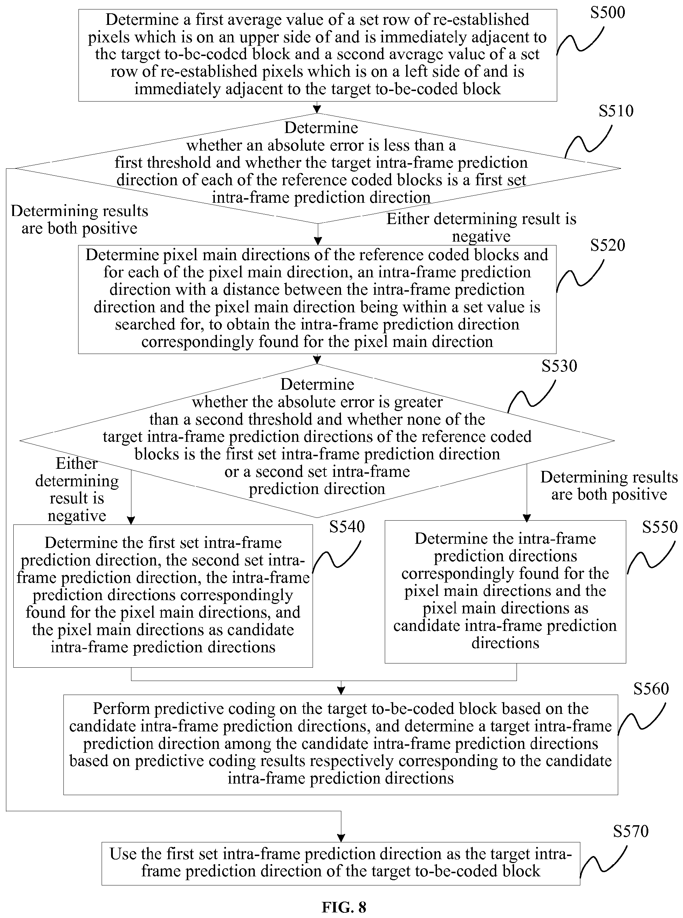

Optionally, FIG. 8 is another flowchart of an intra-frame prediction method according to an embodiment of the present disclosure. Referring to FIG. 8, the method may include the following steps S500 to S570.

In step S500, a first average value of a set row of re-established pixels which is on an upper side of and is immediately adjacent to the target to-be-coded block and a second average value of a set row of re-established pixels which is on a left side of and is immediately adjacent to the target to-be-coded block are determined.

In step S510, it is determined whether an absolute error between the first average value and the second average value is less than a first threshold and whether the target intra-frame prediction direction of each of the reference coded blocks spatially neighboring to the target to-be-coded block is a first set intra-frame prediction direction. If any one of the determining results is negative, step S520 is performed. If determining results are both positive, step S570 is performed.

In step S520, pixel main directions of the reference coded blocks are determined, and for each of the pixel main direction, an intra-frame prediction direction with a distance between the intra-frame prediction direction and the pixel main direction being within a set value is searched for, to obtain the intra-frame prediction direction correspondingly found for the pixel main direction.

In step S530, it is determined whether the absolute error between the first average value and the second average value is greater than a second threshold and whether none of the target intra-frame prediction directions of the reference coded blocks is the first set intra-frame prediction direction or a second set intra-frame prediction direction. If either determining result is negative, step S540 is performed. If determining results are both positive, step S550 is performed.

In step S540, the first set intra-frame prediction direction, the second set intra-frame prediction direction, intra-frame prediction directions correspondingly found for the pixel main directions, and the pixel main directions are determined as candidate intra-frame prediction directions.

Optionally, the first set intra-frame prediction direction, the second set intra-frame prediction direction, the intra-frame prediction directions correspondingly found for the pixel main directions, and the pixel main directions may be determined as the candidate intra-frame prediction directions in a case that the absolute error between the first average value and the second average value is not greater than a second threshold, and/or the target intra-frame prediction directions of the reference coded blocks are all the first set intra-frame prediction direction or the second set intra-frame prediction direction.

For example, in an embodiment of the present disclosure, if it is determined that the absolute error between the first average value and the second average value is not less than the first threshold and not greater than a second threshold, regardless of whether the target intra-frame prediction directions of the reference coded blocks are all the first set intra-frame prediction direction or the second set intra-frame prediction direction, the first set intra-frame prediction direction and the second set intra-frame prediction direction may be added into the candidate intra-frame prediction directions.

For another example, in an embodiment of the present disclosure, if it is determined that the absolute error between the first average value and the second average value is not less than the first threshold and is greater than the second threshold, and the target intra-frame prediction directions of the reference coded blocks are all the first set intra-frame prediction direction or the second set intra-frame prediction direction, the first set intra-frame prediction direction and the second set intra-frame prediction direction may be added into the candidate intra-frame prediction directions.

For still another example, in an embodiment of the present disclosure, is it is determined that the target intra-frame prediction directions of the reference coded blocks are all the second set intra-frame prediction direction, the first set intra-frame prediction direction and the second set intra-frame prediction direction may be added into the candidate intra-frame prediction directions.

In step S550, the intra-frame prediction directions correspondingly found for the pixel main directions and the pixel main directions are determined as candidate intra-frame prediction directions.

Optionally, if the absolute error between the first average value and the second average value is greater than the second threshold, and none of the target intra-frame prediction directions of the reference coded blocks is the first set intra-frame prediction direction or the second set intra-frame prediction direction, the first set intra-frame prediction direction or the second set intra-frame prediction direction may be considered as not possibly the target intra-frame prediction direction of the target to-be-coded block. In this case, the intra-frame prediction directions correspondingly found for the pixel main directions are directly determined as the candidate intra-frame prediction directions.

In step S560, predictive coding is performed on the target to-be-coded block based on the candidate intra-frame prediction directions, and a target intra-frame prediction direction among the candidate intra-frame prediction directions is determined based on predictive coding results respectively corresponding to the candidate intra-frame prediction directions.

In step S570, the first set intra-frame prediction direction is used as the target intra-frame prediction direction of the target to-be-coded block.

Optionally, in an embodiment of the present disclosure, a parallel process of using the first set intra-frame prediction direction as the target intra-frame prediction direction of the target to-be-coded block may be eliminated, and determining of whether the absolute error between the first average value and the second average value is less than the first threshold, and whether the target intra-frame prediction directions of the reference coded blocks are all the first set intra-frame prediction direction is not first performed. Instead, the candidate intra-frame prediction directions are determined in the following manner.

The first set intra-frame prediction direction, the second set intra-frame prediction direction, the intra-frame prediction directions correspondingly found for the pixel main directions, and the pixel main directions are determined as the candidate intra-frame prediction directions in a case that the absolute error between the first average value and the second average value is not greater than a second threshold, and/or the target intra-frame prediction directions of the reference coded blocks are all the first set intra-frame prediction direction or the second set intra-frame prediction direction.

The intra-frame prediction directions correspondingly found for the pixel main directions and the pixel main directions are determined as the candidate intra-frame prediction directions in a case that the absolute error between the first average value and the second average value is greater than the second threshold, and none of the target intra-frame prediction directions of the reference coded blocks is the first set intra-frame prediction direction or the second set intra-frame prediction direction.

Obviously, in an embodiment of the present disclosure, determining of the foregoing conditions may not be performed. Instead, whether the first set intra-frame prediction direction and the second set intra-frame prediction direction are added into the candidate intra-frame prediction directions is randomly selected.

The method shown in FIG. 6 and FIG. 8 is optional. In an embodiment of the present disclosure, when the intra-frame prediction method is implemented, the method shown in FIG. 2 may be performed to determine the target intra-frame prediction direction of the target to-be-coded block.

In an application example, the intra-frame prediction method according to the embodiments of the present disclosure may be applied to a video coding device. When the video coding device performs video coding on a video image, any target to-be-coded block of the video image is coded by using an intra-frame prediction coding manner, and in this process, the intra-frame prediction method according to the embodiments of the present disclosure is used to determine the target intra-frame prediction direction of the target to-be-coded block.

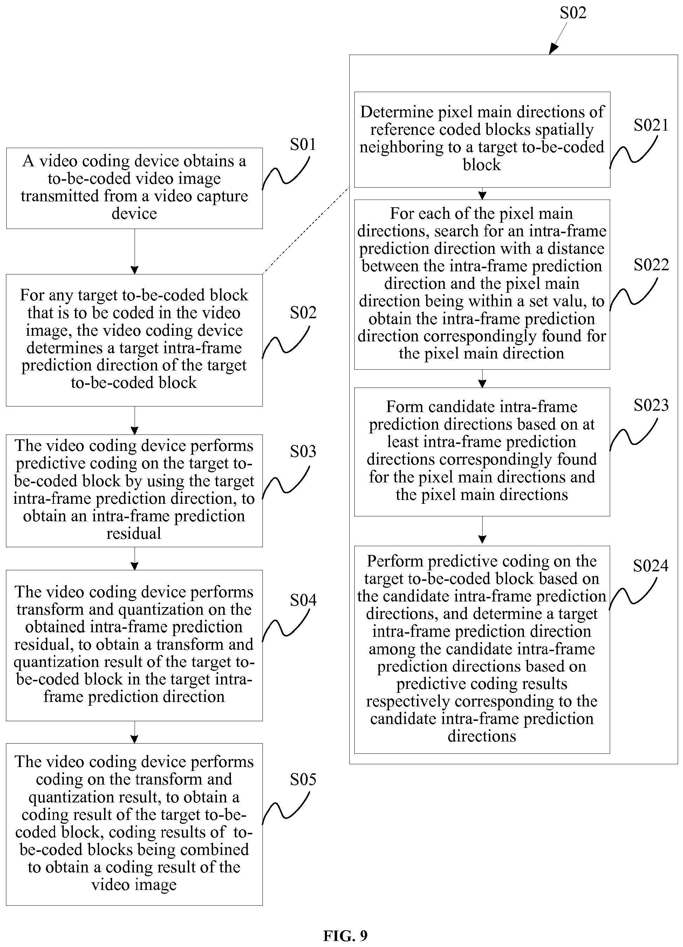

Optionally, in an application example, a video coding process to which the intra-frame prediction method provided according to the embodiments of the present disclosure is applied may be as shown in FIG. 9 and include the following steps S01 to S05.

In step S01, a video coding device obtains a to-be-coded video image transmitted from a video capture device.

Optionally, after capturing the video image, the video capture device may transmit the captured video image to the video coding device, and the video coding device performs video coding in an intra-frame prediction coding manner.

Optionally, the video capture device may be a terminal device having an image capture apparatus such as a camera and may be, for example, a video capture terminal in video live scene. Obviously, a source for the video coding device to obtain a to-be-coded video image is not limited to the video capture device. For example, the video coding device may re-code a saved video image.

Optionally, the video coding device may be implemented as a terminal such as a mobile phone or a notebook computer or may be a server disposed at a network side.

In step S02, for any target to-be-coded block that is to be coded in the video image, the video coding device determines a target intra-frame prediction direction of the target to-be-coded block.

After the video coding device obtains the video image that is to be coded, the video image may be coded by using a to-be-coded block as a unit. For example, after the video coding device obtains the video image, image segmentation may be performed on the video image, to obtain multiple to-be-coded blocks by division.

For any target to-be-coded block in the video image that is to be coded, the above-described intra-frame prediction method according to the embodiments of the present disclosure may be used to determine the target intra-frame prediction direction of the target to-be-coded block.

Optionally, a process of determining the target intra-frame prediction direction of the target to-be-coded block may be shown in refinement of step S02 in FIG. 9 and includes the following steps S021 to S024.

In step S021, pixel main directions of reference coded blocks spatially neighboring to a target to-be-coded block are determined.

In step S022, for each of the pixel main directions, an intra-frame prediction direction with a distance between the intra-frame prediction direction and the pixel main direction being within a set value is searched for, to obtain the intra-frame prediction direction correspondingly found for the pixel main direction.

In step S023, candidate intra-frame prediction directions are formed based on at least intra-frame prediction directions correspondingly found for the pixel main directions and the pixel main directions.

In step S024, predictive coding is performed on the target to-be-coded block based on the candidate intra-frame prediction directions, and a target intra-frame prediction direction among the candidate intra-frame prediction directions is determined based on predictive coding results respectively corresponding to the candidate intra-frame prediction directions.

Optionally, for refinement descriptions S021 to step S024, refer to descriptions of corresponding parts above.

In step S03, the video coding device performs predictive coding on the target to-be-coded block by using the target intra-frame prediction direction, to obtain an intra-frame prediction residual.

After the video coding device determines the target intra-frame prediction direction of the target to-be-coded block, predictive coding may be performed on the target to-be-coded block by using re-established pixels of coded blocks spatially neighboring to the target to-be-coded block based on the target intra-frame prediction direction, to obtain the intra-frame prediction residual of the target to-be-coded block in the target intra-frame prediction direction.

In step S04, the video coding device performs transform and quantization on the obtained intra-frame prediction residual, to obtain a transform and quantization result of the target to-be-coded block in the target intra-frame prediction direction.

After the intra-frame prediction residual of the target to-be-coded block in the target intra-frame prediction direction is obtained, the video coding device may perform transform (such as orthogonal transform) on the intra-frame prediction residual and then perform quantization (such as coefficient quantization), to obtain a transform and quantization result of the target to-be-coded block in the target intra-frame prediction direction.

In step S05, the video coding device performs coding on the transform and quantization result, to obtain a coding result of the target to-be-coded block.

Optionally, in an embodiment of the present disclosure, the transform and quantization result of the target to-be-coded block in the target intra-frame prediction direction may be coded in an entropy coding manner, to obtain the coding result of the target to-be-coded block.

Correspondingly, coding results of the multiple to-be-coded blocks is combined, to obtain a coding result of the video image.

Optionally, the target intra-frame prediction direction of each to-be-coded block in the video image may be written into a bitstream, to facilitate subsequent decoding of the coded video image. A process of decoding the coded video image may be reverse to the foregoing coding process. That is, processing reverse to the foregoing coding process may be performed on the coding result of each to-be-coded block in the coded video image.

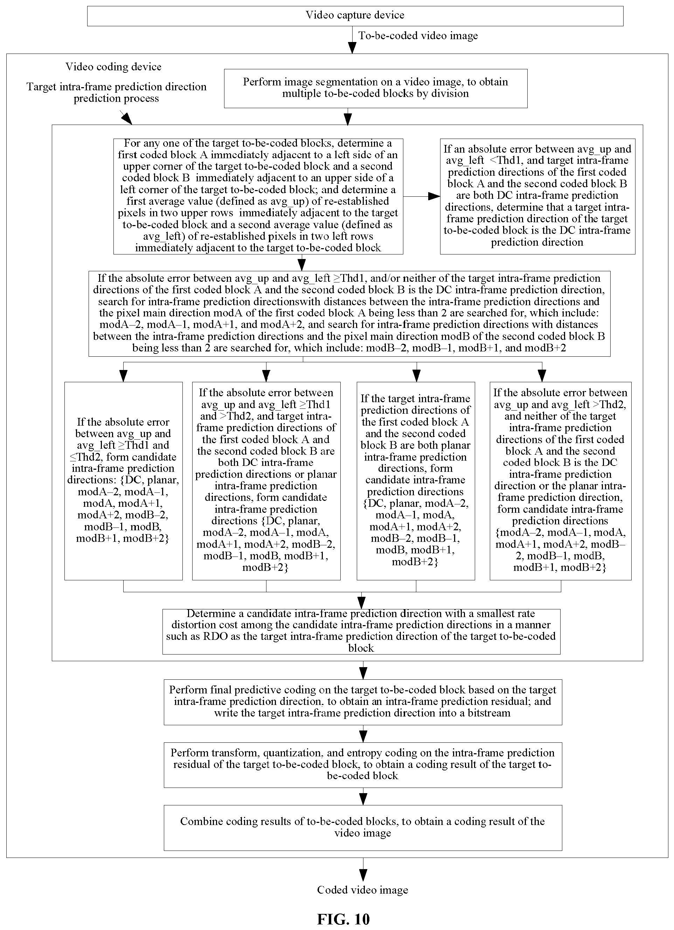

Based on the foregoing application example, the following uses an example in which the reference coded blocks are the first coded block A and the second coded block B, the first pixel main direction is modA, the second pixel main direction is modB, and the set value is 2 (obviously, the specific set value may be adjusted according to an actual situation), to describe a further detailed process of performing video coding by using the intra-frame prediction method according to the embodiments of the present disclosure. For a process of the application example, refer to FIG. 10. The process is as follows.

After the video capture device inputs the video image into the video coding device, the video coding device may perform image segmentation on the video image, to obtain multiple to-be-coded blocks by division.

For any target to-be-coded block, a first coded block A immediately adjacent to a left side of an upper corner of the target to-be-coded block and a second coded block B immediately adjacent to an upper side of a left corner of the target to-be-coded block are determined.

A first average value (defined as avg_up) of re-established pixels in two upper rows immediately adjacent to the target to-be-coded block and a second average value (defined as avg_left) of re-established pixels in two left rows immediately adjacent to the target to-be-coded block are determined.

If an absolute error between avg_up and avg_left is less than a first threshold (defined as Thd1), and target intra-frame prediction directions of the first coded block A and the second coded block B are both DC intra-frame prediction directions, it may be determined that a target intra-frame prediction direction of the target to-be-coded block is the DC intra-frame prediction direction.

If the absolute error between avg_up and avg_left is not less than Thd1, and/or neither of the target intra-frame prediction directions of the first coded block A and the second coded block B is the DC intra-frame prediction direction, in an embodiment of the present disclosure, a direction with a greatest number of pixels in the first coded block A may be used as a pixel main direction modA of the first coded block, a direction with a greatest number of pixels in the second coded block B may be used as a pixel main direction modB of the second coded block, and intra-frame prediction directions with a distance between the intra-frame prediction directions and modA being less than 2 are searched for, which include: modA-2, modA-1, modA+1, and modA+2, Intra-frame prediction directions with a distance between the intra-frame prediction directions and modB being less than 2 are searched for, which include: modB-2, modB-1, modB+1, and modB+2. Subsequently, whether the DC intra-frame prediction direction and the planar intra-frame prediction direction are added into the candidate intra-frame prediction directions is determined according to a specific refinement situation as follows.

In a first situation, if the absolute error between avg_up and avg_left is not less than Thd1 and is not greater than the second threshold (defined as Thd2), candidate intra-frame prediction directions {DC, planar, modA-2, modA-1, modA, modA+1, modA+2, modB-2, modB-1, modB, modB+1, modB+2} are formed.

In a second situation, if the absolute error between avg_up and avg_left is not less than Thd1 and is greater than Thd2, and target intra-frame prediction directions of the first coded block A and the second coded block B are both DC intra-frame prediction directions or planar intra-frame prediction directions, candidate intra-frame prediction directions {DC, planar, modA-2, modA-1, modA, modA+1, modA+2, modB-2, modB-1, modB, modB+1, modB+2} are formed.

In a third situation, if the target intra-frame prediction directions of the first coded block A and the second coded block B are both planar intra-frame prediction directions, candidate intra-frame prediction directions {DC, planar, modA-2, modA-1, modA, modA+1, modA+2, modB-2, modB-1, modB, modB+1, modB+2} are formed.

In a fourth situation, if the absolute error between avg_up and avg_left is greater than Thd2, and neither of the target intra-frame prediction directions of the first coded block A and the second coded block B is the DC intra-frame prediction direction or the planar intra-frame prediction direction, candidate intra-frame prediction directions {modA-2, modA-1, modA, modA+1, modA+2, modB-2, modB-1, modB, modB+1, modB+2} are formed.

Based on the candidate intra-frame prediction directions formed in the foregoing situations, a candidate intra-frame prediction direction with a smallest rate distortion cost may be determined among the candidate intra-frame prediction directions in a manner such as RDO and may be used as a target intra-frame prediction direction of the target to-be-coded block.

After the target intra-frame prediction direction of the target to-be-coded block is determined, final predictive coding may be performed on the target to-be-coded block based on the target intra-frame prediction direction, to obtain an intra-frame prediction residual, and the target intra-frame prediction direction may be written into a bitstream.

Then, transform, quantization, and entropy coding are performed on the intra-frame prediction residual of the target to-be-coded block, to code the target to-be-coded block, to obtain a coding result of the target to-be-coded block.

Coding results of to-be-coded blocks are combined, to obtain a coding result of the video image.

In the intra-frame prediction method according to the embodiments of the present disclosure, the candidate intra-frame prediction directions may be formed based on at least the intra-frame prediction directions correspondingly found for the pixel main directions of the reference coded blocks spatially neighboring to the target to-be-coded block, and the pixel main directions, to greatly reduce the number of the candidate intra-frame prediction directions and control the target intra-frame prediction direction to be selected directly based on the determined candidate intra-frame prediction directions, thereby eliminating a process of rough selection based on all the intra-frame prediction directions, lowering processing complexity of selection of the target intra-frame prediction direction, and lowering complexity of entire video coding, such that real-time video coding can be ensured.

In some cases, in a case that the absolute error between the first average value and the second average value is less than the first threshold, and the target intra-frame prediction directions of the reference coded blocks are all the first set intra-frame prediction direction, the target intra-frame prediction direction of the target to-be-coded block may be directly determined as the first intra-frame prediction direction, thereby greatly reducing processing complexity.

The following describes an intra-frame prediction apparatus according to an embodiment of the present disclosure. The intra-frame prediction apparatus described in the following may be regarded as a video coding device or program modules configured to implement the intra-frame prediction method according to the embodiments of the present disclosure. For content of the intra-frame prediction apparatus described in the following, reference may be made to the content of the intra-frame prediction method described above.

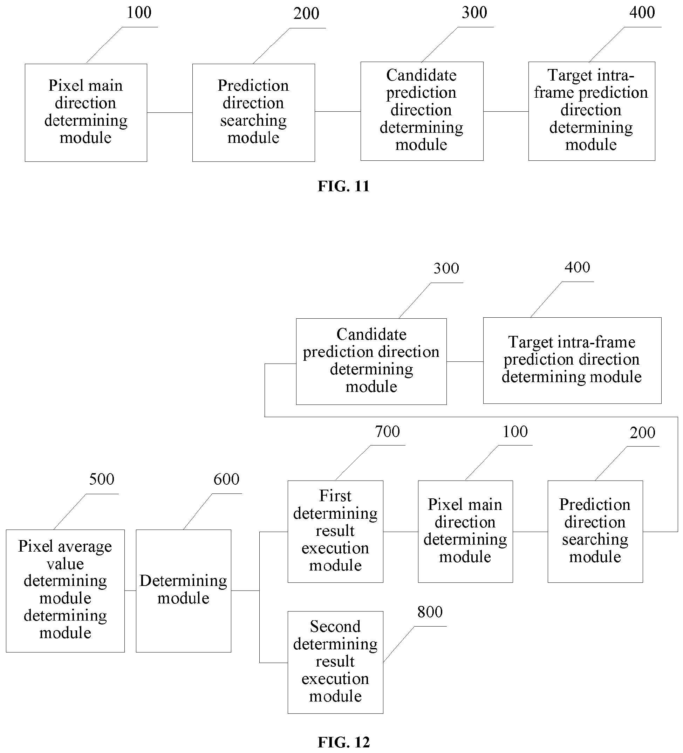

FIG. 11 is a block diagram showing a structure of an intra-frame prediction apparatus according to an embodiment of the present disclosure. The intra-frame prediction apparatus may be applied to a video coding device. Referring to FIG. 11, the intra-frame prediction apparatus may include a pixel main direction determining module 100, a prediction direction searching module 200, a candidate prediction direction determining module 300, and a target intra-frame prediction direction determining module 400.

The pixel main direction determining module 100 is configured to determine pixel main directions of reference coded blocks spatially neighboring to a target to-be-coded block.

The prediction direction searching module 200 is configured to search, for each of the pixel main directions, for an intra-frame prediction direction with a distance between the intra-frame prediction direction and the pixel main direction being within a set value, to obtain the intra-frame prediction direction correspondingly found for the pixel main direction.

The candidate prediction direction determining module 300 is configured to form candidate intra-frame prediction directions based on at least intra-frame prediction directions correspondingly found for the pixel main directions and the pixel main directions.

The target intra-frame prediction direction determining module 400 is configured to perform predictive coding on the target to-be-coded block based on the candidate intra-frame prediction directions, and determine a target intra-frame prediction direction among the candidate intra-frame prediction directions based on predictive coding results respectively corresponding to the candidate intra-frame prediction directions.

Optionally, the prediction direction searching module 200 being configured to search, for each of the pixel main directions, for an intra-frame prediction direction with a distance between the intra-frame prediction direction and the pixel main direction being within a set value, to obtain the intra-frame prediction direction correspondingly found for the pixel main direction includes the prediction direction searching module 200 being configured to:
for each of the pixel main directions, search for, by using the pixel main direction as a center, the intra-frame prediction direction with a distance between the intra-frame prediction direction and the pixel main direction being within the set value, to obtain the intra-frame prediction direction correspondingly found for the pixel main direction.

Specifically, the prediction direction searching module 200 may be configured to:
for any one of the pixel main directions, search for an intra-frame prediction direction which is less than the pixel main direction by a value less than a set value and an intra-frame prediction direction which is greater than the pixel main direction by a value less than a set value, to obtain an intra-frame prediction direction correspondingly found for the pixel main direction.

Optionally, the pixel main direction determining module 100 being configured to determine pixel main directions of reference coded blocks spatially neighboring to a target to-be-coded blocks includes:
for any one of the reference coded blocks, determine directions of pixels of the reference coded block and use a direction with a greatest number of pixels in the reference coded block as a pixel main direction of the reference coded block.

Optionally, FIG. 12 is a block diagram showing a structure of an intra-frame prediction apparatus according to another embodiment of the present disclosure. With reference to FIG. 11 and FIG. 12, the intra-frame prediction apparatus may further include a pixel average value determining module 500, a determining module 600, and a first determining result execution module 700.

The pixel average value determining module 500 is configured to determine a first average value of a set row of re-established pixels which is on an upper side of and is immediately adjacent to the target to-be-coded block and a second average value of a set row of re-established pixels which is on a left side of and is immediately adjacent the target to-be-coded block.

The determining module 600 is configured to determine whether an absolute error between the first average value and the second average value is less than a first threshold and whether the target intra-frame prediction direction of each of the reference coded blocks is a first set intra-frame prediction direction.

The first determining result execution module 700 is configured to trigger the pixel main direction determining module to perform the operation of determining pixel main directions of reference coded blocks spatially neighboring to a target to-be-coded block in a case that the determining module determines that the absolute error between the first average value and the second average value is not less than the first threshold, and/or the target intra-frame prediction direction of each of the reference coded blocks is not the first set intra-frame prediction direction.

Optionally, with reference to FIG. 12, the intra-frame prediction apparatus shown in FIG. 12 may further include a second determining result execution module 800.

The second determining result execution module 800 is configured to use the first set intra-frame prediction direction as the target intra-frame prediction direction of the target to-be-coded block in a case that the determining module determines that the absolute error between the first average value and the second average value is less than the first threshold, and the target intra-frame prediction direction of each of the reference coded blocks is the first set intra-frame prediction direction.

Optionally, based on FIG. 12, the candidate prediction direction determining module 300 is configured to:
in a case that the absolute error between the first average value and the second average value is not greater than a second threshold, and/or the target intra-frame prediction direction of each of the reference coded blocks is the first set intra-frame prediction direction or a second set intra-frame prediction direction, determine the first set intra-frame prediction direction, the second set intra-frame prediction direction, the intra-frame prediction directions correspondingly found for the pixel main directions, and the pixel main directions as the candidate intra-frame prediction directions; and
in a case that the absolute error between the first average value and the second average value is greater than the second threshold, and the target intra-frame prediction direction of each of the reference coded blocks is not the first set intra-frame prediction direction and a second set intra-frame prediction direction, determine the intra-frame prediction directions correspondingly found for the pixel main directions and the pixel main directions as the candidate intra-frame prediction directions.

Optionally, the candidate prediction direction determining module 300 determining the candidate intra-frame prediction directions may be independently implemented.

Optionally, the candidate prediction direction determining module 300 may also randomly select whether the first set intra-frame prediction direction and the second set intra-frame prediction direction are added in the candidate intra-frame prediction directions. This may be determined according to an actual requirement.

Optionally, the reference coded blocks may include a first coded block immediately adjacent to a left side of an upper corner of the target to-be-coded block and a second coded block immediately adjacent to an upper side of a left corner of the target to-be-coded block.

Optionally, the target intra-frame prediction direction determining module 400 being configured to determining a target intra-frame prediction direction among the candidate intra-frame prediction directions based on predictive coding results respectively corresponding to the candidate intra-frame prediction directions includes the target intra-frame prediction direction determining module 400 being configured to:
determine rate distortion costs corresponding to the candidate intra-frame prediction directions based on predictive coding results respectively corresponding to the candidate intra-frame prediction directions; and
select a candidate intra-frame prediction direction with a smallest rate distortion cost as the target intra-frame prediction direction.

Optionally, the target intra-frame prediction direction determining module 400 being configured to determine rate distortion costs corresponding to the candidate intra-frame prediction directions based on predictive coding results respectively corresponding to the candidate intra-frame prediction directions includes the target intra-frame prediction direction determining module 400 being configured to:
determining intra-frame prediction residuals obtained after the predictive coding is performed on the target to-be-coded block based on the candidate intra-frame prediction directions, to obtain the intra-frame prediction residuals corresponding to the candidate intra-frame prediction directions;
performing transform and quantization on the intra-frame prediction residuals corresponding to the candidate intra-frame prediction directions, to obtain transform and quantization results corresponding to the candidate intra-frame prediction directions; and
performing inverse quantization and inverse transform on the transform and quantization results corresponding to the candidate intra-frame prediction directions, to obtain a pixel re-establishment value of the target to-be-coded block corresponding to each of the candidate intra-frame prediction directions; and
determining rate distortion cost corresponding to the candidate intra-frame prediction directions based on the pixel re-establishment value of the target to-be-coded block corresponding to each of the candidate intra-frame prediction directions and a pixel original value of the target to-be-coded block.

The intra-frame prediction apparatus according to the embodiments of the present disclosure can lower selection complexity of the target intra-frame prediction direction, so that complexity of video coding is reduced, thereby meeting a real-time requirement of video coding.

According to an embodiment of the present disclosure, a video coding device is further provided. The video coding device may perform the intra-frame prediction method according to the embodiments of the present disclosure by loading a program for implementing the foregoing program module functions. The video coding device may be implemented as a terminal such as a mobile phone a notebook computer or may be a server.

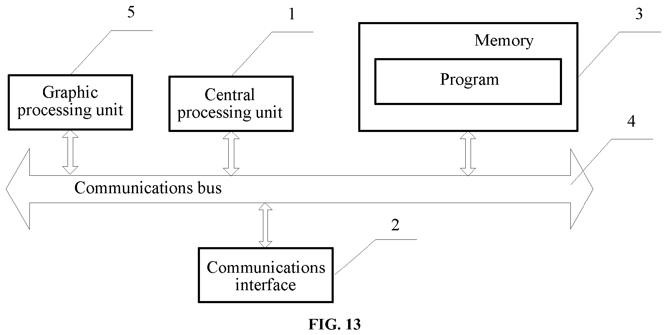

FIG. 13 is a block diagram showing a hardware structure of a video coding device. Referring to FIG. 13, the video coding device may include at least one central processing unit 1, at least one communications interface 2, at least one memory 3, at least one communications bus 4, and at least one graphic processing unit 5.

In an embodiment of the present disclosure, the number of each of the processor 1, the communications interface 2, the memory 3, the communications bus 4, and the graphic processing unit 5 may be at least one. The processor 1, the communications interface 2, and the memory 3 communicate with each other through the communications bus 4.

The memory stores a program to be executed by a central processing unit or a graphic processing unit to perform:
determining pixel main directions of reference coded blocks spatially neighboring to a target to-be-coded block, the target to-be-coded block being a to-be-coded block on which predictive coding is to be performed;
searching, for each of the pixel main directions, for an intra-frame prediction direction, with a distance between the intra-frame prediction direction and the pixel main direction being within a set value, to obtain the intra-frame prediction direction correspondingly found for the pixel main direction;
forming candidate intra-frame prediction directions based on at least the pixel main directions in combination with intra-frame prediction directions correspondingly found for the pixel main directions; and
performing predictive coding on the target to-be-coded block based on the candidate intra-frame prediction directions, and determining a target intra-frame prediction direction among the candidate intra-frame prediction directions based on predictive coding results respectively corresponding to the candidate intra-frame prediction directions.

Optionally, for fining functions and expansion functions of the program, refer to descriptions of corresponding parts above.

A storage medium is further provided according to an embodiment of the present disclosure, the storage medium stores a program to be executed by a central processing unit or a graphic processing unit, for performing any implementation of the intra-frame prediction method in the foregoing embodiments.

A computer program product is further provided according to an embodiment of the present disclosure, the computer program product includes an instruction, when being run on a computer, causing the computer to perform any implementation of the intra-frame prediction method in the foregoing embodiments.

Optionally, for fining functions and expansion functions of the program, refer to descriptions of corresponding parts above.

The embodiments in this specification are all described in a progressive manner. Description of each of the embodiments focuses on differences from other embodiments, and reference may be made to each other for the same or similar parts among respective embodiments. The apparatus embodiments are substantially similar to the method embodiments and therefore are only briefly described, and reference may be made to the method embodiments for the associated part.

A person skilled in the art may further realize that, in combination with the embodiments herein, units and algorithm, steps of each example described can be implemented with electronic hardware, computer software, or the combination thereof. In order to clearly describe the interchangeability between the hardware and the software, compositions and steps of each example have been generally described according to functions in the foregoing descriptions. Whether the functions are executed in a mode of hardware or software depends on particular applications and design constraint conditions of the technical solutions. A Person skilled in the art can use different methods to implement the described functions for each particular application, but it is not to be considered that the implementation goes beyond the scope of the embodiments of the present disclosure.

In combination with the embodiments herein, steps of the method or algorithm described may be directly implemented using hardware, a software module executed by a processor, or the combination thereof. The software module may be placed in a random access memory (RAM), a memory, a read-only memory (ROM), an electrically programmable ROM (EPROM), an electrically erasable programmable ROM (EEPROM), a register, a hard disk, a removable magnetic disk, a CD-ROM, or any storage medium of other forms well-known in the technical field.

The above descriptions of the disclosed embodiments make a person skilled in the art implement or use the present disclosure. Therefore, the present disclosure is not limited to these embodiments illustrated in the present disclosure, but needs to conform to the broadest scope consistent with the principles and novel features disclosed in the present disclosure.

## Claims

1. An intra-frame prediction method, applied to a video coding device, comprising:
determining, for each of reference coded blocks spatially neighboring to a target to-be-coded block, the target to-be-coded block being a to-be-coded block on which predictive coding is to be performed, a pixel main direction corresponding to one out of a plurality of intra-frame prediction directions indicated by numerals, wherein determining the pixel main direction for each reference coded block includes
determining directions of pixels of the reference coded block using a Sobel Operator, and a direction with a greatest number of pixels in the reference coded block is used as the pixel main direction of the reference coded block;
searching, for each of the pixel main directions, for one or more of the intra-frame prediction directions, with a distance between numerals of the intra-frame prediction direction and the pixel main direction being within a set value, the set value being 2, to obtain the intra-frame prediction directions correspondingly found for the pixel main direction;
forming candidate intra-frame prediction directions based on at least intra-frame prediction directions correspondingly found for the pixel main directions and the pixel main directions; and
performing predictive coding on the target to-be-coded block based on the candidate intra-frame prediction directions, and determining a target intra-frame prediction direction among the candidate intra-frame prediction directions based on predictive coding results respectively corresponding to the candidate intra-frame prediction directions, the method further comprising:
determining a first average value of a set row of re-established pixels which is on an upper side of and is immediately adjacent to the target to-be-coded block and a second average value of a set row of re-established pixels which is on a left side of and is immediately adjacent to the target to-be-coded block;
determining whether an absolute error between the first average value and the second average value is less than a first threshold and whether the intra-frame prediction direction of each of the reference coded blocks is a first set intra-frame prediction direction, the first set intra-frame prediction direction being direct current, DC, component prediction intra-frame prediction direction; and
triggering performing the operation of determining pixel main directions of reference coded blocks spatially neighboring to a target to-be-coded block in a case that the absolute error between the first average value and the second average value is not less than the first threshold, and/or the intra-frame prediction direction of each of the reference coded blocks is not the first set intra-frame prediction direction.

2. The intra-frame prediction method according to claim 1, wherein the searching, for each of the pixel main directions, for an intra-frame prediction direction, with a distance between the intra-frame prediction direction and the pixel main direction being within a set value, to obtain the intra-frame prediction direction correspondingly found for the pixel main direction comprises:
for any one of the pixel main directions, searching for an intra-frame prediction direction which is less than the pixel main direction by a value less than a set value, and an intra-frame prediction direction which is greater than the pixel main direction by a value less than the set value, to obtain the intra-frame prediction direction correspondingly found for the pixel main direction.

3. The intra-frame prediction method according to claim 1, further comprising:
using the first set intra-frame prediction direction as the target intra-frame prediction direction of the target to-be-coded block in a case that the absolute error between the first average value and the second average value is less than the first threshold, and the intra-frame prediction direction of each of the reference coded blocks is the first set intra-frame prediction direction.

4. The intra-frame prediction method according to claim 1, wherein the forming candidate intra-frame prediction directions based on at least intra-frame prediction directions correspondingly found for the pixel main directions and the pixel main directions comprises:
in a case that the absolute error between the first average value and the second average value is not greater than a second threshold, and/or the intra-frame prediction direction of each of the reference coded blocks is the first set intra-frame prediction direction or a second set intra-frame prediction direction, determining the first set intra-frame prediction direction, the second set intra-frame prediction direction, the intra-frame prediction directions correspondingly found for the pixel main directions, and the pixel main directions as the candidate intra-frame prediction directions; and
in a case that the absolute error between the first average value and the second average value is greater than the second threshold, and the intra-frame prediction direction of each of the reference coded blocks is not the first set intra-frame prediction direction and a second set intra-frame prediction direction, determining the intra-frame prediction directions correspondingly found for the pixel main directions and the pixel main directions as the candidate intra-frame prediction directions.

5. The intra-frame prediction method according to claim 1, wherein the reference coded blocks comprise a first coded block immediately adjacent to a left side of an upper corner of the target to-be-coded block and a second coded block immediately adjacent to an upper side of a left corner of the target to-be-coded block.

6. The intra-frame prediction method according to claim 1, wherein the performing predictive coding on the target to-be-coded block based on the candidate intra-frame prediction directions, and determining a target intra-frame prediction direction among the candidate intra-frame prediction directions based on predictive coding results respectively corresponding to the candidate intra-frame prediction directions comprises:
determining rate distortion costs corresponding to the candidate intra-frame prediction directions based on predictive coding results respectively corresponding to the candidate intra-frame prediction directions; and
selecting a candidate intra-frame prediction direction with a smallest rate distortion cost as the target intra-frame prediction direction.

7. The intra-frame prediction method according to claim 6, wherein the determining rate distortion costs corresponding to the candidate intra-frame prediction directions based on predictive coding results respectively corresponding to the candidate intra-frame prediction directions comprises:
determining intra-frame prediction residuals obtained after the predictive coding is performed on the target to-be-coded block based on the candidate intra-frame prediction directions, to obtain the intra-frame prediction residuals corresponding to the candidate intra-frame prediction directions;
performing transform and quantization on the intra-frame prediction residuals corresponding to the candidate intra-frame prediction directions, to obtain transform and quantization results corresponding to the candidate intra-frame prediction directions; and
performing inverse quantization and inverse transform on the transform and quantization results corresponding to the candidate intra-frame prediction directions, to obtain a pixel re-establishment value of the target to-be-coded block corresponding to each of the candidate intra-frame prediction directions; and
determining rate distortion costs corresponding to the candidate intra-frame prediction directions based on the pixel re-establishment value of the target to-be-coded block corresponding to each of the candidate intra-frame prediction directions and a pixel original value of the target to-be-coded block.

8. An intra-frame prediction apparatus, applied to a video coding device, comprising:
a pixel main direction determining module, configured to determine a pixel main direction corresponding to one out of a plurality of intra-frame prediction directions indicated by numerals for each of reference coded blocks spatially neighboring to a target to-be-coded block, the target to-be-coded block being a to-be-coded block on which predictive coding is to be performed, wherein determining the pixel main direction for each reference coded block includes
determining directions of pixels of the reference coded block using a Sobel Operator, and a direction with a greatest number of pixels in the reference coded block is used as the pixel main direction of the reference coded block;
a prediction direction searching module, configured to search, for each of the pixel main directions, for an intra-frame prediction direction, with a distance between numerals of the intra-frame prediction direction and the pixel main direction being within a set value, the set value being 2, to obtain the intra-frame prediction direction correspondingly found for the pixel main direction;
a candidate prediction direction determining module, configured to form candidate intra-frame prediction directions based on at least intra-frame prediction directions correspondingly found for the pixel main directions and the pixel main directions; and
a target intra-frame prediction direction determining module, configured to perform predictive coding on the target to-be-coded block based on the candidate intra-frame prediction directions, and determine a target intra-frame prediction direction among the candidate intra-frame prediction directions based on predictive coding results respectively corresponding to the candidate intra-frame prediction directions, the apparatus further comprising:
a pixel average value determining module, configured to determine a first average value of a set row of re-established pixels which is on an upper side of and is immediately adjacent to the target to-be-coded block and a second average value of a set row of re-established pixels which is on a left side of and is immediately adjacent to the target to-be-coded block;
a determining module, configured to determine whether an absolute error between the first average value and the second average value is less than a first threshold and whether the intra-frame prediction direction of each of the reference coded blocks is a first set intra-frame prediction direction, the first set intra-frame prediction direction being a direct current, DC, component prediction intra-frame prediction direction; and
a first determining result execution module, configured to trigger the pixel main direction determining module to perform the operation of determining pixel main directions of reference coded blocks spatially neighboring to a target to-be-coded block in a case that the determining module determines that the absolute error between the first average value and the second average value is not less than the first threshold, and/or the intra-frame prediction direction of each of the reference coded blocks is not the first set intra-frame prediction direction.

9. The intra-frame prediction apparatus according to claim 8, wherein the prediction direction searching module being configured to search, for each of the pixel main directions, for an intra-frame prediction direction, with a distance between the intra-frame prediction direction and the pixel main direction being within a set value, to obtain the intra-frame prediction direction correspondingly found for the pixel main direction comprises the prediction direction searching module being configured to:
search, for any one of the pixel main directions, for an intra-frame prediction direction which is less than the pixel main direction by a value less than a set value, and an intra-frame prediction direction which is greater than the pixel main direction by a value less than the set value, to obtain the intra-frame prediction direction correspondingly found for the pixel main direction.

10. The intra-frame prediction apparatus according to claim 8, further comprising:
a second determining result execution module, configured to use the first set intra-frame prediction direction as the intra-frame prediction direction of the target to-be-coded block in a case that the determining module determines that the absolute error between the first average value and the second average value is less than the first threshold, and the intra-frame prediction direction of each of the reference coded blocks is the first set intra-frame prediction direction.

11. The intra-frame prediction apparatus according to claim 8, wherein the candidate prediction direction determining module being configured to form candidate intra-frame prediction directions based on at least intra-frame prediction directions correspondingly found for the pixel main directions and the pixel main directions comprises the candidate prediction direction determining module being configured to:
in a case that the absolute error between the first average value and the second average value is not greater than a second threshold, and/or the intra-frame prediction direction of each of the reference coded blocks is the first set intra-frame prediction direction or a second set intra-frame prediction direction, determine the first set intra-frame prediction direction, the second set intra-frame prediction direction, the intra-frame prediction directions correspondingly found for the pixel main directions, and the pixel main directions as the candidate intra-frame prediction directions; and
in a case that the absolute error between the first average value and the second average value is greater than the second threshold, and the intra-frame prediction direction of each of the reference coded blocks is not the first set intra-frame prediction direction and a second set intra-frame prediction direction, determine the intra-frame prediction directions correspondingly found for the pixel main directions and the pixel main directions as the candidate intra-frame prediction directions.

12. A video coding device, comprising:
a memory, configured to store information; and
a processor, connected to the memory and configured to perform the method according to any one of claims 1 to 7, by executing a computer program stored in the memory.

13. A storage medium, storing a program configured to be executed by a central processing unit or a graphic processing unit, for performing the method according to any one of claims 1 to 7.

14. A computer program product, comprising instructions, when being run on a computer, the instructions causing the computer to perform the method according to any one of claims 1 to 7.

## Patentansprüche

1. Intra-Frame-Vorhersageverfahren, angewendet auf eine Videocodiervorrichtung, umfassend:
Bestimmen, für jeden Referenz-codierten Block, der räumlich an einen Ziel-zu-codierenden Block angrenzt, wobei der Ziel-zu-codierende Block ein zu codierender Block ist, an dem eine prädiktive Codierung durchzuführen ist, einer Pixel-Hauptrichtung, die einer Richtung aus einer Vielzahl von durch Ziffern angegebenen Intra-Frame-Vorhersagerichtungen entspricht, wobei das Bestimmen der Pixel-Hauptrichtung für jeden Referenz-codierten Block umfasst Bestimmen von Richtungen von Pixeln des Referenz-codierten Blocks unter Verwendung eines Sobel-Operators, und eine Richtung mit einer größten Anzahl von Pixeln in dem Referenz-codierten Block wird als die Pixel-Hauptrichtung des Referenz-codierten Blocks verwendet;
Suchen, für jede der Pixel-Hauptrichtungen, nach einer oder mehreren der Intra-Frame-Vorhersagerichtungen, mit einem Abstand zwischen Ziffern der Intra-Frame-Vorhersagerichtung und der Pixel-Hauptrichtung innerhalb eines festgelegten Wertes, wobei der festgelegte Wert 2 ist, um die entsprechend für die Pixel-Hauptrichtung gefundenen Intra-Frame-Vorhersagerichtungen zu erhalten;
Bilden von Kandidaten-Intra-Frame-Vorhersagerichtungen basierend auf mindestens den entsprechend für die Pixel-Hauptrichtungen gefundenen Intra-Frame-Vorhersagerichtungen und den Pixel-Hauptrichtungen; und
Durchführen einer prädiktiven Codierung an dem Ziel-zu-codierenden Block basierend auf den Kandidaten-Intra-Frame-Vorhersagerichtungen, und Bestimmen einer Ziel-Intra-Frame-Vorhersagerichtung unter den Kandidaten-Intra-Frame-Vorhersagerichtungen basierend auf prädiktiven Codierungsergebnissen, die jeweils den Kandidaten-Intra-Frame-Vorhersagerichtungen entsprechen,
wobei das Verfahren ferner umfasst:
Bestimmen eines ersten Durchschnittswerts eines Satzes von Reihen wiederhergestellter Pixel, der sich auf einer oberen Seite von und unmittelbar angrenzend an den Ziel-zu-codierenden Block befindet, und eines zweiten Durchschnittswerts eines Satzes von Reihen wiederhergestellter Pixel, der sich auf einer linken Seite von und unmittelbar angrenzend an den Ziel-zu-codierenden Block befindet;
Bestimmen, ob ein absoluter Fehler zwischen dem ersten Durchschnittswert und dem zweiten Durchschnittswert kleiner als ein erster Schwellenwert ist und ob die Intra-Frame-Vorhersagerichtung jedes der Referenz-codierten Blöcke eine erste festgelegte Intra-Frame-Vorhersagerichtung ist, wobei die erste festgelegte Intra-Frame-Vorhersagerichtung eine Gleichstrom-DC-Komponenten-Vorhersage-Intra-Frame-Vorhersagerichtung ist; und
Auslösen der Durchführung der Operation des Bestimmens von Pixel-Hauptrichtungen von Referenz-codierten Blöcken, die räumlich an einen Ziel-zu-codierenden Block angrenzen, in einem Fall, dass der absolute Fehler zwischen dem ersten Durchschnittswert und dem zweiten Durchschnittswert nicht kleiner als der erste Schwellenwert ist, und/oder die Intra-Frame-Vorhersagerichtung jedes der Referenz-codierten Blöcke nicht die erste festgelegte Intra-Frame-Vorhersagerichtung ist.

2. Intra-Frame-Vorhersageverfahren nach Anspruch 1, wobei das Suchen, für jede der Pixel-Hauptrichtungen, nach einer Intra-Frame-Vorhersagerichtung, mit einem Abstand zwischen der Intra-Frame-Vorhersagerichtung und der Pixel-Hauptrichtung innerhalb eines festgelegten Wertes, um die entsprechend für die Pixel-Hauptrichtung gefundene Intra-Frame-Vorhersagerichtung zu erhalten, umfasst:
für jede der Pixel-Hauptrichtungen, Suchen nach einer Intra-Frame-Vorhersagerichtung, die kleiner als die Pixel-Hauptrichtung um einen Wert kleiner als ein festgelegter Wert ist, und einer Intra-Frame-Vorhersagerichtung, die größer als die Pixel-Hauptrichtung um einen Wert kleiner als der festgelegte Wert ist, um die entsprechend für die Pixel-Hauptrichtung gefundene Intra-Frame-Vorhersagerichtung zu erhalten.

3. Intra-Frame-Vorhersageverfahren nach Anspruch 1, ferner umfassend:
Verwenden der ersten festgelegten Intra-Frame-Vorhersagerichtung als die Ziel-Intra-Frame-Vorhersagerichtung des Ziel-zu-codierenden Blocks in einem Fall, dass der absolute Fehler zwischen dem ersten Durchschnittswert und dem zweiten Durchschnittswert kleiner als der erste Schwellenwert ist, und die Intra-Frame-Vorhersagerichtung jedes der Referenz-codierten Blöcke die erste festgelegte Intra-Frame-Vorhersagerichtung ist.

4. Intra-Frame-Vorhersageverfahren nach Anspruch 1, wobei das Bilden von Kandidaten-Intra-Frame-Vorhersagerichtungen basierend auf mindestens Intra-Frame-Vorhersagerichtungen, die entsprechend für die Pixel-Hauptrichtungen gefunden wurden, und den Pixel-Hauptrichtungen umfasst:
in einem Fall, dass der absolute Fehler zwischen dem ersten Durchschnittswert und dem zweiten Durchschnittswert nicht größer als ein zweiter Schwellenwert ist, und/oder die Intra-Frame-Vorhersagerichtung jedes der Referenz-codierten Blöcke die erste festgelegte Intra-Frame-Vorhersagerichtung oder eine zweite festgelegte Intra-Frame-Vorhersagerichtung ist, Bestimmen der ersten festgelegten Intra-Frame-Vorhersagerichtung, der zweiten festgelegten Intra-Frame-Vorhersagerichtung, der entsprechend für die Pixel-Hauptrichtungen gefundenen Intra-Frame-Vorhersagerichtungen und der Pixel-Hauptrichtungen als die Kandidaten-Intra-Frame-Vorhersagerichtungen; und
in einem Fall, dass der absolute Fehler zwischen dem ersten Durchschnittswert und dem zweiten Durchschnittswert größer als der zweite Schwellenwert ist, und die Intra-Frame-Vorhersagerichtung jedes der Referenz-codierten Blöcke nicht die erste festgelegte Intra-Frame-Vorhersagerichtung und eine zweite festgelegte Intra-Frame-Vorhersagerichtung ist, Bestimmen der entsprechend für die Pixel-Hauptrichtungen gefundenen Intra-Frame-Vorhersagerichtungen und der Pixel-Hauptrichtungen als die Kandidaten-Intra-Frame-Vorhersagerichtungen.

5. Intra-Frame-Vorhersageverfahren nach Anspruch 1, wobei die Referenz-codierten Blöcke einen ersten codierten Block, der unmittelbar an eine linke Seite einer oberen Ecke des Ziel-zu-codierenden Blocks angrenzt, und einen zweiten codierten Block umfassen, der unmittelbar an eine obere Seite einer linken Ecke des Ziel-zu-codierenden Blocks angrenzt.

6. Intra-Frame-Vorhersageverfahren nach Anspruch 1, wobei das Durchführen einer prädiktiven Codierung an dem Ziel-zu-codierenden Block basierend auf den Kandidaten-Intra-Frame-Vorhersagerichtungen, und Bestimmen einer Ziel-Intra-Frame-Vorhersagerichtung unter den Kandidaten-Intra-Frame-Vorhersagerichtungen basierend auf prädiktiven Codierungsergebnissen, die jeweils den Kandidaten-Intra-Frame-Vorhersagerichtungen entsprechen, umfasst:
Bestimmen von Raten-Verzerrungskosten, die den Kandidaten-Intra-Frame-Vorhersagerichtungen entsprechen, basierend auf prädiktiven Codierungsergebnissen, die jeweils den Kandidaten-Intra-Frame-Vorhersagerichtungen entsprechen; und
Auswählen einer Kandidaten-Intra-Frame-Vorhersagerichtung mit geringsten Raten-Verzerrungskosten als die Ziel-Intra-Frame-Vorhersagerichtung.

7. Intra-Frame-Vorhersageverfahren nach Anspruch 6, wobei das Bestimmen von Raten-Verzerrungskosten, die den Kandidaten-Intra-Frame-Vorhersagerichtungen entsprechen, basierend auf prädiktiven Codierungsergebnissen, die jeweils den Kandidaten-Intra-Frame-Vorhersagerichtungen entsprechen, umfasst:
Bestimmen von Intra-Frame-Vorhersageresiduen, die erhalten werden, nachdem die prädiktive Codierung an dem Ziel-zu-codierenden Block basierend auf den Kandidaten-Intra-Frame-Vorhersagerichtungen durchgeführt wird, um die den Kandidaten-Intra-Frame-Vorhersagerichtungen entsprechenden Intra-Frame-Vorhersageresiduen zu erhalten;
Durchführen von Transformation und Quantisierung an den den Kandidaten-Intra-Frame-Vorhersagerichtungen entsprechenden Intra-Frame-Vorhersageresiduen, um Transformations- und Quantisierungsergebnisse zu erhalten, die den Kandidaten-Intra-Frame-Vorhersagerichtungen entsprechen; und
Durchführen von inverser Quantisierung und inverser Transformation an den Transformations- und Quantisierungsergebnissen, die den Kandidaten-Intra-Frame-Vorhersagerichtungen entsprechen, um einen Pixel-Wiederherstellungswert des Ziel-zu-codierenden Blocks zu erhalten, der jeder der Kandidaten-Intra-Frame-Vorhersagerichtungen entspricht; und
Bestimmen von Raten-Verzerrungskosten, die den Kandidaten-Intra-Frame-Vorhersagerichtungen entsprechen, basierend auf dem Pixel-Wiederherstellungswert des Ziel-zu-codierenden Blocks, der jeder der Kandidaten-Intra-Frame-Vorhersagerichtungen entspricht, und einem Original-Pixelwert des Ziel-zu-codierenden Blocks.

8. Intra-Frame-Vorhersagevorrichtung, angewendet auf eine Videocodiervorrichtung, umfassend:
ein Pixel-Hauptrichtungs-Bestimmungsmodul, konfiguriert zum Bestimmen einer Pixel-Hauptrichtung, die einer Richtung aus einer Vielzahl von durch Ziffern angegebenen Intra-Frame-Vorhersagerichtungen entspricht, für jeden Referenz-codierten Block, der räumlich an einen Ziel-zu-codierenden Block angrenzt, wobei der Ziel-zu-codierende Block ein zu codierender Block ist, an dem eine prädiktive Codierung durchzuführen ist, wobei das Bestimmen der Pixel-Hauptrichtung für jeden Referenz-codierten Block umfasst Bestimmen von Richtungen von Pixeln des Referenz-codierten Blocks unter Verwendung eines Sobel-Operators, und eine Richtung mit einer größten Anzahl von Pixeln in dem Referenz-codierten Block wird als die Pixel-Hauptrichtung des Referenz-codierten Blocks verwendet;
ein Vorhersagerichtungs-Suchmodul, konfiguriert zum Suchen, für jede der Pixel-Hauptrichtungen, nach einer Intra-Frame-Vorhersagerichtung, mit einem Abstand zwischen Ziffern der Intra-Frame-Vorhersagerichtung und der Pixel-Hauptrichtung innerhalb eines festgelegten Wertes, wobei der festgelegte Wert 2 ist, um die entsprechend für die Pixel-Hauptrichtung gefundene Intra-Frame-Vorhersagerichtung zu erhalten;
ein Kandidaten-Vorhersagerichtungs-Bestimmungsmodul, konfiguriert zum Bilden von Kandidaten-Intra-Frame-Vorhersagerichtungen basierend auf mindestens entsprechend für die Pixel-Hauptrichtungen gefundenen Intra-Frame-Vorhersagerichtungen und den Pixel-Hauptrichtungen; und
ein Ziel-Intra-Frame-Vorhersagerichtungs-Bestimmungsmodul, konfiguriert zum Durchführen einer prädiktiven Codierung an dem Ziel-zu-codierenden Block basierend auf den Kandidaten-Intra-Frame-Vorhersagerichtungen, und Bestimmen einer Ziel-Intra-Frame-Vorhersagerichtung unter den Kandidaten-Intra-Frame-Vorhersagerichtungen basierend auf prädiktiven Codierungsergebnissen, die jeweils den Kandidaten-Intra-Frame-Vorhersagerichtungen entsprechen, wobei die Vorrichtung ferner umfasst:
ein Pixel-Durchschnittswert-Bestimmungsmodul, konfiguriert zum Bestimmen eines ersten Durchschnittswerts eines Satzes von Reihen wiederhergestellter Pixel, der sich auf einer oberen Seite von und unmittelbar angrenzend an den Ziel-zu-codierenden Block befindet, und eines zweiten Durchschnittswerts eines Satzes von Reihen wiederhergestellter Pixel, der sich auf einer linken Seite von und unmittelbar angrenzend an den Ziel-zu-codierenden Block befindet;
ein Bestimmungsmodul, konfiguriert zum Bestimmen, ob ein absoluter Fehler zwischen dem ersten Durchschnittswert und dem zweiten Durchschnittswert kleiner als ein erster Schwellenwert ist und ob die Intra-Frame-Vorhersagerichtung jedes der Referenz-codierten Blöcke eine erste festgelegte Intra-Frame-Vorhersagerichtung ist, wobei die erste festgelegte Intra-Frame-Vorhersagerichtung eine Gleichstrom-DC-Komponenten-Vorhersage-Intra-Frame-Vorhersagerichtung ist; und
ein erstes Bestimmungsergebnis-Ausführungsmodul, konfiguriert zum Auslösen des Pixel-Hauptrichtungs-Bestimmungsmoduls, die Operation des Bestimmens von Pixel-Hauptrichtungen von Referenz-codierten Blöcken, die räumlich an einen Ziel-zu-codierenden Block angrenzen, durchzuführen, in einem Fall, dass das Bestimmungsmodul bestimmt, dass der absolute Fehler zwischen dem ersten Durchschnittswert und dem zweiten Durchschnittswert nicht kleiner als der erste Schwellenwert ist, und/oder die Intra-Frame-Vorhersagerichtung jedes der Referenz-codierten Blöcke nicht die erste festgelegte Intra-Frame-Vorhersagerichtung ist.

9. Intra-Frame-Vorhersagevorrichtung nach Anspruch 8, wobei das Vorhersagerichtungs-Suchmodul, das konfiguriert ist zum Suchen, für jede der Pixel-Hauptrichtungen, nach einer Intra-Frame-Vorhersagerichtung, mit einem Abstand zwischen der Intra-Frame-Vorhersagerichtung und der Pixel-Hauptrichtung innerhalb eines festgelegten Wertes, um die entsprechend für die Pixel-Hauptrichtung gefundene Intra-Frame-Vorhersagerichtung zu erhalten, umfasst, dass das Vorhersagerichtungs-Suchmodul konfiguriert ist zum: Suchen, für jede der Pixel-Hauptrichtungen, nach einer Intra-Frame-Vorhersagerichtung, die kleiner als die Pixel-Hauptrichtung um einen Wert kleiner als ein festgelegter Wert ist, und einer Intra-Frame-Vorhersagerichtung, die größer als die Pixel-Hauptrichtung um einen Wert kleiner als der festgelegte Wert ist, um die entsprechend für die Pixel-Hauptrichtung gefundene Intra-Frame-Vorhersagerichtung zu erhalten.

10. Intra-Frame-Vorhersagevorrichtung nach Anspruch 8, ferner umfassend:
ein zweites Bestimmungsergebnis-Ausführungsmodul, konfiguriert zum Verwenden der ersten festgelegten Intra-Frame-Vorhersagerichtung als die Intra-Frame-Vorhersagerichtung des Ziel-zu-codierenden Blocks in einem Fall, dass das Bestimmungsmodul bestimmt, dass der absolute Fehler zwischen dem ersten Durchschnittswert und dem zweiten Durchschnittswert kleiner als der erste Schwellenwert ist, und die Intra-Frame-Vorhersagerichtung jedes der Referenz-codierten Blöcke die erste festgelegte Intra-Frame-Vorhersagerichtung ist.

11. Intra-Frame-Vorhersagevorrichtung nach Anspruch 8, wobei das Kandidaten-Vorhersagerichtungs-Bestimmungsmodul, das konfiguriert ist zum Bilden von Kandidaten-Intra-Frame-Vorhersagerichtungen basierend auf mindestens entsprechend für die Pixel-Hauptrichtungen gefundenen Intra-Frame-Vorhersagerichtungen und den Pixel-Hauptrichtungen, umfasst, dass das Kandidaten-Vorhersagerichtungs-Bestimmungsmodul konfiguriert ist zum:
in einem Fall, dass der absolute Fehler zwischen dem ersten Durchschnittswert und dem zweiten Durchschnittswert nicht größer als ein zweiter Schwellenwert ist, und/oder die Intra-Frame-Vorhersagerichtung jedes der Referenz-codierten Blöcke die erste festgelegte Intra-Frame-Vorhersagerichtung oder eine zweite festgelegte Intra-Frame-Vorhersagerichtung ist, Bestimmen der ersten festgelegten Intra-Frame-Vorhersagerichtung, der zweiten festgelegten Intra-Frame-Vorhersagerichtung, der entsprechend für die Pixel-Hauptrichtungen gefundenen Intra-Frame-Vorhersagerichtungen und der Pixel-Hauptrichtungen als die Kandidaten-Intra-Frame-Vorhersagerichtungen; und
in einem Fall, dass der absolute Fehler zwischen dem ersten Durchschnittswert und dem zweiten Durchschnittswert größer als der zweite Schwellenwert ist, und die Intra-Frame-Vorhersagerichtung jedes der Referenz-codierten Blöcke nicht die erste festgelegte Intra-Frame-Vorhersagerichtung und eine zweite festgelegte Intra-Frame-Vorhersagerichtung ist, Bestimmen der entsprechend für die Pixel-Hauptrichtungen gefundenen Intra-Frame-Vorhersagerichtungen und der Pixel-Hauptrichtungen als die Kandidaten-Intra-Frame-Vorhersagerichtungen.

12. Videocodiervorrichtung, umfassend:
einen Speicher, konfiguriert zum Speichern von Informationen; und
einen Prozessor, verbunden mit dem Speicher und konfiguriert zum Durchführen des Verfahrens nach einem der Ansprüche 1 bis 7, durch Ausführen eines in dem Speicher gespeicherten Computerprogramms.

13. Speichermedium, das ein Programm speichert, das konfiguriert ist, um von einer Zentralverarbeitungseinheit oder einer Grafikverarbeitungseinheit ausgeführt zu werden, zum Durchführen des Verfahrens nach einem der Ansprüche 1 bis 7.

14. Computerprogrammprodukt, umfassend Anweisungen, die, wenn sie auf einem Computer ausgeführt werden, den Computer veranlassen, das Verfahren nach einem der Ansprüche 1 bis 7 durchzuführen.

## Revendications

1. Procédé de prédiction intra-trame, appliqué à un dispositif de codage vidéo, comprenant :
la détermination, pour chaque bloc codé de référence spatialement voisin d'un bloc cible à coder, le bloc cible à coder étant un bloc à coder sur lequel un codage prédictif doit être effectué, d'une direction principale de pixel correspondant à une direction parmi une pluralité de directions de prédiction intra-trame indiquées par des chiffres, dans lequel la détermination de la direction principale de pixel pour chaque bloc codé de référence comprend la détermination de directions de pixels du bloc codé de référence à l'aide d'un opérateur de Sobel, et une direction avec un plus grand nombre de pixels dans le bloc codé de référence est utilisée comme direction principale de pixel du bloc codé de référence ;
la recherche, pour chacune des directions principales de pixel, d'une ou plusieurs des directions de prédiction intra-trame, avec une distance entre les chiffres de la direction de prédiction intra-trame et de la direction principale de pixel étant dans une valeur définie, la valeur définie étant 2, pour obtenir les directions de prédiction intra-trame trouvées de manière correspondante pour la direction principale de pixel ;
la formation de directions de prédiction intra-trame candidates basées sur au moins les directions de prédiction intra-trame trouvées de manière correspondante pour les directions principales de pixel et les directions principales de pixel ; et
l'exécution d'un codage prédictif sur le bloc cible à coder basé sur les directions de prédiction intra-trame candidates, et la détermination d'une direction de prédiction intra-trame cible parmi les directions de prédiction intra-trame candidates basée sur des résultats de codage prédictif correspondant respectivement aux directions de prédiction intra-trame candidates, le procédé comprenant en outre :
la détermination d'une première valeur moyenne d'un ensemble de rangées de pixels rétablis qui est sur un côté supérieur de et est immédiatement adjacent au bloc cible à coder et d'une seconde valeur moyenne d'un ensemble de rangées de pixels rétablis qui est sur un côté gauche de et est immédiatement adjacent au bloc cible à coder ;
la détermination de si une erreur absolue entre la première valeur moyenne et la seconde valeur moyenne est inférieure à un premier seuil et de si la direction de prédiction intra-trame de chacun des blocs codés de référence est une première direction de prédiction intra-trame définie, la première direction de prédiction intra-trame définie étant une direction de prédiction intra-trame de composante à courant continu, DC ; et
le déclenchement de l'exécution de l'opération de détermination des directions principales de pixel de blocs codés de référence spatialement voisins d'un bloc cible à coder dans un cas où l'erreur absolue entre la première valeur moyenne et la seconde valeur moyenne n'est pas inférieure au premier seuil, et/ou la direction de prédiction intra-trame de chacun des blocs codés de référence n'est pas la première direction de prédiction intra-trame définie.

2. Procédé de prédiction intra-trame selon la revendication 1, dans lequel la recherche, pour chacune des directions principales de pixel, d'une direction de prédiction intra-trame, avec une distance entre la direction de prédiction intra-trame et la direction principale de pixel étant dans une valeur définie, pour obtenir la direction de prédiction intra-trame trouvée de manière correspondante pour la direction principale de pixel comprend :
pour chacune des directions principales de pixel, la recherche d'une direction de prédiction intra-trame qui est inférieure à la direction principale de pixel d'une valeur inférieure à une valeur définie, et d'une direction de prédiction intra-trame qui est supérieure à la direction principale de pixel d'une valeur inférieure à la valeur définie, pour obtenir la direction de prédiction intra-trame trouvée de manière correspondante pour la direction principale de pixel.

3. Procédé de prédiction intra-trame selon la revendication 1, comprenant en outre :
l'utilisation de la première direction de prédiction intra-trame définie comme direction de prédiction intra-trame cible du bloc cible à coder dans un cas où l'erreur absolue entre la première valeur moyenne et la seconde valeur moyenne est inférieure au premier seuil, et la direction de prédiction intra-trame de chacun des blocs codés de référence est la première direction de prédiction intra-trame définie.

4. Procédé de prédiction intra-trame selon la revendication 1, dans lequel la formation de directions de prédiction intra-trame candidates basées sur au moins les directions de prédiction intra-trame trouvées de manière correspondante pour les directions principales de pixel et les directions principales de pixel comprend :
dans un cas où l'erreur absolue entre la première valeur moyenne et la seconde valeur moyenne n'est pas supérieure à un second seuil, et/ou la direction de prédiction intra-trame de chacun des blocs codés de référence est la première direction de prédiction intra-trame définie ou une seconde direction de prédiction intra-trame définie, la détermination de la première direction de prédiction intra-trame définie, de la seconde direction de prédiction intra-trame définie, des directions de prédiction intra-trame trouvées de manière correspondante pour les directions principales de pixel, et des directions principales de pixel comme directions de prédiction intra-trame candidates ; et
dans un cas où l'erreur absolue entre la première valeur moyenne et la seconde valeur moyenne est supérieure au second seuil, et la direction de prédiction intra-trame de chacun des blocs codés de référence n'est pas la première direction de prédiction intra-trame définie et une seconde direction de prédiction intra-trame définie, la détermination des directions de prédiction intra-trame trouvées de manière correspondante pour les directions principales de pixel et des directions principales de pixel comme directions de prédiction intra-trame candidates.

5. Procédé de prédiction intra-trame selon la revendication 1, dans lequel les blocs codés de référence comprennent un premier bloc codé immédiatement adjacent à un côté gauche d'un coin supérieur du bloc cible à coder et un second bloc codé immédiatement adjacent à un côté supérieur d'un coin gauche du bloc cible à coder.

6. Procédé de prédiction intra-trame selon la revendication 1, dans lequel l'exécution d'un codage prédictif sur le bloc cible à coder basé sur les directions de prédiction intra-trame candidates, et la détermination d'une direction de prédiction intra-trame cible parmi les directions de prédiction intra-trame candidates basée sur des résultats de codage prédictif correspondant respectivement aux directions de prédiction intra-trame candidates comprend :
la détermination de coûts de distorsion de débit correspondant aux directions de prédiction intra-trame candidates basée sur des résultats de codage prédictif correspondant respectivement aux directions de prédiction intra-trame candidates ; et
la sélection d'une direction de prédiction intra-trame candidate avec un plus petit coût de distorsion de débit comme direction de prédiction intra-trame cible.

7. Procédé de prédiction intra-trame selon la revendication 6, dans lequel la détermination de coûts de distorsion de débit correspondant aux directions de prédiction intra-trame candidates basée sur des résultats de codage prédictif correspondant respectivement aux directions de prédiction intra-trame candidates comprend :
la détermination de résidus de prédiction intra-trame obtenus après que le codage prédictif est effectué sur le bloc cible à coder basé sur les directions de prédiction intra-trame candidates, pour obtenir les résidus de prédiction intra-trame correspondant aux directions de prédiction intra-trame candidates ;
l'exécution d'une transformation et d'une quantification sur les résidus de prédiction intra-trame correspondant aux directions de prédiction intra-trame candidates, pour obtenir des résultats de transformation et de quantification correspondant aux directions de prédiction intra-trame candidates ; et
l'exécution d'une quantification inverse et d'une transformation inverse sur les résultats de transformation et de quantification correspondant aux directions de prédiction intra-trame candidates, pour obtenir une valeur de rétablissement de pixel du bloc cible à coder correspondant à chacune des directions de prédiction intra-trame candidates ; et
la détermination de coûts de distorsion de débit correspondant aux directions de prédiction intra-trame candidates basée sur la valeur de rétablissement de pixel du bloc cible à coder correspondant à chacune des directions de prédiction intra-trame candidates et une valeur originale de pixel du bloc cible à coder.

8. Appareil de prédiction intra-trame, appliqué à un dispositif de codage vidéo, comprenant :
un module de détermination de direction principale de pixel, configuré pour déterminer une direction principale de pixel correspondant à une direction parmi une pluralité de directions de prédiction intra-trame indiquées par des chiffres pour chaque bloc codé de référence spatialement voisin d'un bloc cible à coder, le bloc cible à coder étant un bloc à coder sur lequel un codage prédictif doit être effectué, dans lequel la détermination de la direction principale de pixel pour chaque bloc codé de référence comprend la détermination de directions de pixels du bloc codé de référence à l'aide d'un opérateur de Sobel, et une direction avec un plus grand nombre de pixels dans le bloc codé de référence est utilisée comme direction principale de pixel du bloc codé de référence ;
un module de recherche de direction de prédiction, configuré pour rechercher, pour chacune des directions principales de pixel, une direction de prédiction intra-trame, avec une distance entre les chiffres de la direction de prédiction intra-trame et de la direction principale de pixel étant dans une valeur définie, la valeur définie étant 2, pour obtenir la direction de prédiction intra-trame trouvée de manière correspondante pour la direction principale de pixel ;
un module de détermination de direction de prédiction candidate, configuré pour former des directions de prédiction intra-trame candidates basées sur au moins des directions de prédiction intra-trame trouvées de manière correspondante pour les directions principales de pixel et les directions principales de pixel ; et
un module de détermination de direction de prédiction intra-trame cible, configuré pour effectuer un codage prédictif sur le bloc cible à coder basé sur les directions de prédiction intra-trame candidates, et déterminer une direction de prédiction intra-trame cible parmi les directions de prédiction intra-trame candidates basée sur des résultats de codage prédictif correspondant respectivement aux directions de prédiction intra-trame candidates, l'appareil comprenant en outre :
un module de détermination de valeur moyenne de pixel, configuré pour déterminer une première valeur moyenne d'un ensemble de rangées de pixels rétablis qui est sur un côté supérieur de et est immédiatement adjacent au bloc cible à coder et une seconde valeur moyenne d'un ensemble de rangées de pixels rétablis qui est sur un côté gauche de et est immédiatement adjacent au bloc cible à coder ;
un module de détermination, configuré pour déterminer si une erreur absolue entre la première valeur moyenne et la seconde valeur moyenne est inférieure à un premier seuil et si la direction de prédiction intra-trame de chacun des blocs codés de référence est une première direction de prédiction intra-trame définie, la première direction de prédiction intra-trame définie étant une direction de prédiction intra-trame de composante à courant continu, DC ; et
un premier module d'exécution de résultat de détermination, configuré pour déclencher le module de détermination de direction principale de pixel pour effectuer l'opération de détermination des directions principales de pixel de blocs codés de référence spatialement voisins d'un bloc cible à coder dans un cas où le module de détermination détermine que l'erreur absolue entre la première valeur moyenne et la seconde valeur moyenne n'est pas inférieure au premier seuil, et/ou la direction de prédiction intra-trame de chacun des blocs codés de référence n'est pas la première direction de prédiction intra-trame définie.

9. Appareil de prédiction intra-trame selon la revendication 8, dans lequel le module de recherche de direction de prédiction est configuré pour rechercher, pour chacune des directions principales de pixel, une direction de prédiction intra-trame, avec une distance entre la direction de prédiction intra-trame et la direction principale de pixel étant dans une valeur définie, pour obtenir la direction de prédiction intra-trame trouvée de manière correspondante pour la direction principale de pixel comprend le module de recherche de direction de prédiction étant configuré pour :
rechercher, pour chacune des directions principales de pixel, une direction de prédiction intra-trame qui est inférieure à la direction principale de pixel d'une valeur inférieure à une valeur définie, et une direction de prédiction intra-trame qui est supérieure à la direction principale de pixel d'une valeur inférieure à la valeur définie, pour obtenir la direction de prédiction intra-trame trouvée de manière correspondante pour la direction principale de pixel.

10. Appareil de prédiction intra-trame selon la revendication 8, comprenant en outre :
un second module d'exécution de résultat de détermination, configuré pour utiliser la première direction de prédiction intra-trame définie comme direction de prédiction intra-trame du bloc cible à coder dans un cas où le module de détermination détermine que l'erreur absolue entre la première valeur moyenne et la seconde valeur moyenne est inférieure au premier seuil, et la direction de prédiction intra-trame de chacun des blocs codés de référence est la première direction de prédiction intra-trame définie.

11. Appareil de prédiction intra-trame selon la revendication 8, dans lequel le module de détermination de direction de prédiction candidate étant configuré pour former des directions de prédiction intra-trame candidates basées sur au moins des directions de prédiction intra-trame trouvées de manière correspondante pour les directions principales de pixel et les directions principales de pixel comprend le module de détermination de direction de prédiction candidate étant configuré pour :
dans un cas où l'erreur absolue entre la première valeur moyenne et la seconde valeur moyenne n'est pas supérieure à un second seuil, et/ou la direction de prédiction intra-trame de chacun des blocs codés de référence est la première direction de prédiction intra-trame définie ou une seconde direction de prédiction intra-trame définie,
déterminer la première direction de prédiction intra-trame définie, la seconde direction de prédiction intra-trame définie, les directions de prédiction intra-trame trouvées de manière correspondante pour les directions principales de pixel, et les directions principales de pixel comme directions de prédiction intra-trame candidates ; et
dans un cas où l'erreur absolue entre la première valeur moyenne et la seconde valeur moyenne est supérieure au second seuil, et la direction de prédiction intra-trame de chacun des blocs codés de référence n'est pas la première direction de prédiction intra-trame définie et une seconde direction de prédiction intra-trame définie, déterminer les directions de prédiction intra-trame trouvées de manière correspondante pour les directions principales de pixel et les directions principales de pixel comme directions de prédiction intra-trame candidates.

12. Dispositif de codage vidéo, comprenant :
une mémoire, configurée pour stocker des informations ;
et un processeur, connecté à la mémoire et configuré pour exécuter le procédé selon l'une quelconque des revendications 1 à 7, en exécutant un programme informatique stocké dans la mémoire.

13. Support de stockage, stockant un programme configuré pour être exécuté par une unité centrale de traitement ou une unité de traitement graphique, pour exécuter le procédé selon l'une quelconque des revendications 1 à 7.

14. Produit programme d'ordinateur, comprenant des instructions, lorsqu'il est exécuté sur un ordinateur, les instructions amenant l'ordinateur à exécuter le procédé selon l'une quelconque des revendications 1 à 7.
